# EUROPÄISCHE PATENTSCHRIFT

(11) **EP 1 268 602 B1**
(45) Veröffentlichungstag und Bekanntmachung des Hinweises auf die Patenterteilung: **26.01.2005**
(21) Anmeldenummer: 01936051.0
(22) Anmeldetag: 15.02.2001
(51) Int. Cl.: C08G 18/80

(54) **WÄSSRIGE ÜBERZUGSMITTEL FÜR FESTKÖRPERREICHE EINBRENNLACKIERUNGEN**
AQUEOUS COATING AGENTS FOR BAKING ENAMELS WITH A HIGH SOLID CONTENT
AGENTS DE REVETEMENT AQUEUX POUR VERNIS A CUIRE RICHES EN MATIERE SOLIDE

(30) Priorität: 28.02.2000 DE 10009412; 28.02.2000 DE 10009413; 28.02.2000 DE 10009414
(43) Veröffentlichungstag der Anmeldung: 02.01.2003
(73) Patentinhaber: Bayer MaterialScience AG, 51368 Leverkusen (DE)
(72) Erfinder: WAMPRECHT, Christian, 41472 Neuss (DE); BAUMBACH, Beate, 51373 Leverkusen (DE); MÜLLER, Heino, 51377 Leverkusen (DE); PETZOLDT, Joachim, 40789 Monheim (DE)
(86) Internationale Anmeldenummer: PCT/EP2001/001649
(87) Internationale Veröffentlichungsnummer: WO 2001/062814

(56) Entgegenhaltungen:
- EP-A- 0 576 952
- EP-A- 0 805 171
- EP-A- 0 863 173
- EP-A- 0 899 282

## Beschreibung

Die vorliegende Erfindung betrifft neuartige wässrige Überzugsmittel für Einbrennlackierungen, insbesondere für die Herstellung von harten, elastischen, festkörperreichen Füllern zur Beschichtung von Automobilkarossen.

In den letzten Jahren stieg die Bedeutung wässriger Lacke und Beschichtungen aufgrund immer strengerer Emissionsrichtlinien bezüglich der bei der Lackapplikation frei werdenden Lösemittel stark an. Obwohl inzwischen bereits für viele Anwendungsbereiche wässrige Lacksysteme zur Verfügung stehen, können diese das hohe Qualitätsniveau konventioneller, lösemittelhaltiger Lacke hinsichtlich Lösemittel- und Chemikalienbeständigkeit oder auch Elastizität und mechanischer Belastbarkeit oftmals noch nicht vollständig erreichen. Insbesondere sind bislang keine aus wässriger Phase zu verarbeitenden Beschichtungsmittel auf Polyurethanbasis bekannt, die den hohen Forderungen der Praxis an harte aber gleichzeitige elastische Füller mit hohem Festkörpergehalt zur Beschichtung von Automobilkarosserien bezüglich Filmhärte, Schlagzähigkeit, Steinschlagbeständigkeit sowie Wasser- und Chemikalienbeständigkeit vollständig genügen.

Diese Feststellung gilt sowohl für die GB-A 1 444 933, die EP-A 0 061 628 und die DE-A 2 359 613, die sich mit der hydrophilen Modifizierung von aromatischen Polyisocyanaten befassen, als auch für die DE-A 4 001 783, die sich mit speziellen anionisch modifizierten aliphatischen Polyisocyanaten befasst, als auch für die Systeme der DE-A 2 456 469, der DE-A 2 814 815, der EP-A 0 012 348 und der EP-A 0 424 697, die sich mit wässrigen Einbrennbindemitteln auf Basis von blockierten Polyisocyanaten und organischen Polyhydroxylverbindungen befassen. Auch die Systeme auf Basis von carboxylgruppenhaltigen Polyurethan-Prepolymeren mit verkappten Isocyanatgruppen gemäß DE-A 2 708 611 bzw. die blockierten, wasserlöslichen Urethanprepolymerisate gemäß DE-A 3 234 590 sind für den genannten Einsatzbereich weitgehend unbrauchbar. Deutliche Fortschritte bezüglich Elastizität und Lösemittel-, Wasser- bzw. Chemikalienbeständigkeit sind mit den Systemen der DE-A 4 221 924, die Kombinationen aus speziellen, blockierten, in Wasser löslichen oder dispergierbaren Polyisocyanatgemischen und speziellen, in Wasser löslichen oder dispergierbaren Polyhydroxylverbindungen beschreibt, zu erzielen. Weitere Verbesserungen hinsichtlich der erforderlichen Einbrenntemperatur bzw. Reaktivität von Einbrennlacken lassen sich erzielen, wenn wasserverdünnbare bzw. in Wasser dispergierbare Polyisocyanatvernetzer mit Pyrazolen als Blockierungsmittel verwendet werden, wie z. B. beschrieben in der WO 97/12924 und der EP-A 0 802 210.

Der Festkörpergehalt, einschließlich Bindemitteln, Vernetzern, Additiven, Pigmenten und Füllstoffen dieser beschriebenen und zum Teil im Praxiseinsatz befindlichen wässrigen Füller liegt bei Verarbeitungsviskosität im allgemeinen zwischen 47 und 50, maximal 53 Gew.-%. Wünschenswert ist in diesen Zusammenhang jedoch ein wesentlich höherer Festkörpergehalt, um den Auftragswirkungsgrad bei der Applikation deutlich zu verbessern. Weiterhin wird eine wesentlich höhere Härte für eine bessere Schleifbarkeit der Füller gefordert, wobei gleichzeitig gute Elastizitätseigenschaften ein hohes Steinschlagschutzniveau garantieren sollen.

Wie jetzt überraschenderweise gefunden wurde, gelingt die Herstellung von aus wässriger Phase zu verarbeitenden Einbrennfüllern, die neben den von bisherigen Füllern in der Praxis erfüllten Forderungen einen höheren Festkörpergehalt aufweisen und nach dem Einbrennen Beschichtungen mit sehr hoher Härte aber gleichzeitig sehr guten Steinschlagschutzeigenschaften ergeben, wenn als Bindemittel ausgewählte Kombinationen der nachstehend näher beschriebenen Art verwendet werden. Die erfindungsgemäßen Einbrennlacke bestehen aus:
I) speziellen in Wasser dispergierten Bindemitteln,
II) in Wasser löslichen oder dispergierbaren Polyhydroxylverbindungen,
III) in Wasser löslichen oder dispergierbaren Vernetzerharzen und
IV) gegebenenfalls weiteren in Wasser löslichen oder dispergierbaren Substanzen.

Durch die Verwendung dieser neuen, erfindungsgemäßen Bindemittelgemische in wässrigen Einbrennlacken können sehr hohe Festkörpergehalte erzielt werden. Somit ist eine Erhöhung der Auftragseffizienz bzw. Ergiebigkeit gegeben. Bei Fülleranwendungen werden Beschichtungen erhalten, bei denen die Härte und damit auch die Schleifbarkeit sowie der Decklackstand im Vergleich zum Stand der Technik deutlich verbessert sind.

Gegenstand der Erfindung sind Bindemittelgemische bestehend aus:
1) einer wässrigen selbstvernetzenden Dispersion (I) bestehend aus:
   A) mindestens einer Polyolkomponente auf Basis von Polyacrylatpolyolen und/oder Polyesterpolyarylatpolyolen mit einem Hydroxylgruppengehalt von 1,0 bis 8,0 Gew.-%, einem Carboxylgruppengehalt von 0 bis 3 Gew.-%, einem gewichtsgemittelten Molekulargewicht von 2000 bis 50000 und einer Glasübergangstemperatur ≥10°C,
   B) mindestens einer Polyisocyanatkomponente mit blockierten Isocyanatgruppen auf Basis von (cyclo)aliphatischen Polyisocyanaten mit einem Gehalt an blockierten Isocyanatgruppen von 5,0 bis 25,0 Gew.-%,
   C) gegebenenfalls weiteren polyfunktionellen Polyolen,
   D) gegebenenfalls weiteren Vernetzersubstanzen,
   E) gegebenenfalls externen Emulgatoren und
   F) gegebenenfalls üblichen Zusatzmitteln,
   mit der Maßgabe, dass die Komponente I) entweder nach einem Direktdispergierverfahren oder nach dem Phasenumkehrverfahren mittels einer Dispergiervorrichtung mit hoher volumenbezogener Dispergierleistung hergestellt wurde und eine mittlere Teilchengröße der Dispersionspartikel von 0,05 bis 10 µm, vorzugsweise 0,1 bis 5 µm insbesondere bei 0,15 bis 2,5 µm und besonders bevorzugt 0,2 bis 1,5 µm Teilchendurchmesser aufweist, und
2) weiteren Komponenten
   II) in Wasser löslichen oder dispergierbaren Polyhydroxylverbindungen,
   III) in Wasser löslichen oder dispergierbaren Vernetzerharzen und
   IV) gegebenenfalls weiteren in Wasser löslichen oder dispergierbaren Substanzen,
dadurch gekennzeichnet, dass das Bindemittelgemisch Feststoffgehalte von ≥ 55 Gew.-% aufweist.

Die Polyolkomponente A) der wässrigen selbstvemetzenden Dispersion I) besteht aus
a) 0 bis 100 Gew.-Teilen einer Polyesterkomponente, bestehend aus mindestens einem Polyesterpolyol mit einer Hydroxylzahl von 20 bis 240 mg KOH/g bei einer Säurezahl von <20 mg KOH/g und einer Glasübergangstemperatur von -40 bis +100°C,
b) 0 bis 15 Gew.-Teilen einer olefinisch ungesättigten Esterkomponente, bestehend aus mindestens einem Maleinsäuredi(cyclo)alkylester mit 1 bis 12 Kohlenstoffatomen im (Cyclo)alkylrest,
c) 0 bis 70 Gew.-Teilen (Cyclo)alkylester der Acryl- und/oder Methacrylsäure mit 1 bis 18 Kohlenstoffatomen im (Cyclo)alkylrest,
d) 0 bis 70 Gew.-Teilen aromatischen, olefinisch ungesättigten Monomeren,
e) 5 bis 60 Gew.-Teilen Hydroxyalkylester der Acryl- und/oder Methacrylsäure mit 2 bis 4 Kohlenstoffatomen im Hydroxyalkylrest und/oder deren. Umsetzungsprodukte eines maximalen Molekulargewichts von 500 mit ε-Caprolacton sowie Additionsprodukten von Acryl- und/oder Methacrylsäure und Monoepoxidverbindungen, die auch während der radikalischen Polymerisation in situ erzeugt werden können,
f) 0 bis 10 Gew.-Teilen olefinisch ungesättigten Carbonsäuren und
g) 0 bis 30 Gew.-Teilen weiteren copolymerisierbaren, olefinisch ungesättigten Verbindungen,
wobei die Summe der Gew.-Teile der Komponenten a) bis g) 100 ergibt.

Die Polyolkomponent A) weist einen Hydroxylgruppengehalt von 1 bis 8 Gew.-%, vorzugsweise 1,5 bis 6 Gew.-% und besonders bevorzugt 2 bis 5 Gew.-% auf. Der Gehalt an Carboxylgruppen liegt bei 0 bis 3 Gew.-%, vorzugsweise 0,1 bis 1,7 Gew.-% und besonders bevorzugt 0,2 bis 1,3 Gew.-%. Das mittels Gelpermeationschromatographie bestimmbare Molekulargewicht (Gewichtsmittel, Standard Polystyrol) liegt bei 2000 bis 50000, vorzugsweise 2500 bis 40000 und besonders bevorzugt 3 000 bis 35 000. Die Glasübergangstemperatur nach der Differentialthermoanalyse (DTA) liegt bei ≥ 10°C, vorzugsweise bei 20 bis 100°C und besonders bevorzugt bei 30 bis 80°C.

Bevorzugt besteht die Polyolkomponente A) aus
a) 0 bis 60 Gew.-Teilen einer Polyesterkomponente, bestehend aus mindestens einem Polyesterpolyol mit einer Hydroxylzahl von 30 bis 200 mg KOH/g bei einer Säurezahl von <15 mg KOH/g und einer Glasübergangstemperatur von -30 bis +80 °C,
b) 0 bis 12,5 Gew.-Teilen einer olefinisch ungesättigten Esterkomponent, bestehend aus mindestens einem Maleinsäuredi(cyclo)alkylester mit 1 bis 6 Kohlenstoffatomen im (Cyclo)alkylrest,
c) 5 bis 65 Gew.-Teilen (Cyclo)alkylester der Acryl- und/oder Methacrylsäure mit 1 bis 15 Kohlenstoffatomen im (Cyclo)alkylrest,
d) 0 bis 65 Gew.-Teilen Styrol, α-Methylstyrol und/oder Vinyltoluol,
e) 5 bis 55 Gew.-Teilen Hydroxyalkylester der Acryl- und/oder Methacrylsäure mit 2 bis 4 Kohlenstoffatomen im Hydroxyalkylrest und/oder deren Umsetzungsprodukte eines maximalen Molekulargewichts von 500 mit ε-Caprolacton sowie Additionsprodukten von Acryl- und/oder Methacrylsäure und Monoepoxidverbindungen, die auch während der radikalischen Polymerisation in situ erzeugt werden können.
f) 0 bis 7,5 Gew.-Teilen Acrylsäure, Methacrylsäure, Maleinsäure, Fumarsäure und/oder Malein- bzw. Fumarsäurehalbester mit 1 bis 8 Kohlenstoffatomen im Alkoholrest und
g) 0 bis 25 Gew.-Teilen weiteren copolymerisierbaren, olefinisch ungesättigten Verbindungen,
wobei die Summe der Gew.-Teile der Komponenten a) bis g) 100 ergibt.

Besonders bevorzugt besteht die Komponente A) aus
a) 0 bis 50 Gew.-Teilen einer Polyesterkomponente, bestehend aus mindestens einem Polyesterpolyol mit einer Hydroxylzahl von 40 bis 160 mg KOH/g bei einer Säurezahl von <12 mg KOH/g und einer Glasübergangstemperatur von -30 bis + 70 °C,
b) 0 bis 10 Gew.-Teilen Maleinsäuredimethylester, Maleinsäurediethylester, Maleinsäuredibutylester oder Gemische dieser Monomeren
c) 5 bis 60 Gew.-Teilen (Cyclo)alkylester der Acryl- und/oder Methacrylsäure mit 1 bis 12 Kohlenstoffatomen im (Cyclo)alkylrest,
d) 5 bis 50 Gew.-Teilen Styrol,
e) 10 bis 50 Gew.-Teile Hydroxyethylacrylat, Hydroxyethylmethacrylat, Hydroxypropylacrylat, Hydroxypropylmethacrylat, Hydroxybutylacrylat und/oder Hydroxybutylmethacrylat,
f) 0,5 bis 5 Gew.-Teile Acrylsäure und/oder Methacrylsäure und
g) 0 bis 20 Gew.-Teilen weiteren copolymerisierbaren, olefinisch ungesättigten Verbindungen,
wobei die Summe der Komponenten a) bis g) 100 ergibt.

Bei der Polyesterkomponente a) handelt es sich um mindestens einen hydroxyfunktionellen Polyester mit einer Hydroxylzahl von 20 bis 240 mg KOH/g, vorzugsweise 30 bis 200 mg KOH/g und besonders bevorzugt 40 bis 160 mg KOH/g. Die Säurezahl liegt unter 20 mg KOH/g, vorzugsweise unter 15 mg KOH/g und besonders bevorzugt unter 12 mg KOH/g. Die Glasübergangstemperarur der Polyesterkomponente a) liegt bei -40 bis +100°C, vorzugsweise -30 bis +80°C und besonders bevorzugt -30 bis +70°C. Das aus der Stöchiometrie der eingesetzten Ausgangsmaterialien berechenbare Molekulargewicht der Polyesterpolyole liegt bei ca. 460 bis 1 1300 g/mol, vorzugsweise bei ca. 570 bis 7 500 g/mol und besonders bevorzugt bei ca. 700 bis 5 700 g/mol.

Bei der Herstellung der hydroxyfunktionellen Polyester können insgesamt 6 Gruppen von Monomerbestandteilen zur Anwendung kommen:
1) (Cyclo)Alkandiole (d. h. zweiwertige Alkohole mit (cyclo)aliphatisch gebundenen Hydroxylgruppen) des Molekulargewichtsbereichs 62 bis 286, wie z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dirnethanol, 1,2- und 1,4-Cyclohexandiol, 2-Ethyl-2-butylpropandiol, Ethersauerstoff enthaltende Diole, wie z. B. Diethylenglykol, Triethylenglykol, Tetraethylenglykol, Dipropylenglykol, Tripropylenglykol, Polyethylen-, Polypropylen- oder Polybutylenglykole mit einem maximalen Molekulargewicht von ca. 2 000, vorzugsweise ca. 1 000 und besonders bevorzugt ca. 500. Umsetzungsprodukte der zuvor genannten Diole mit ε-Caprolacton können ebenfalls als Diole zum Einsatz gelangen.
2) Drei- und höherwertige Alkohole des Molekulargewichtsbereichs 92 bis 254, wie z.B. Glycerin, Trimethylolpropan, Pentaerythrit, Dipentaerythrit und Sorbit.
3) Monoalkohole wie z. B. Ethanol, 1- und 2-Propanol, 1- und 2-Butanol, 1-Hexanol, 2-Ethylhexanol, Cyclohexanol und Benzylalkohol.
4) Dicarbonsäuren des Molekulargewichtsbereichs 116 bis ca. 600 und/oder deren Anhydride, wie z.B. Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Maleinsäureanhydrid, Fumarsäure, Bernsteinsäure, Bemsteinsäureanhydrid, Adipinsäure, Dodecandisäure, hydrierte Dimerfettsäuren.
5) Höherfunktionelle Carbonsäuren bzw. deren Anhydride wie z.B. Trimellithsäure und Trimellithsäureanhydrid.
6) Monocarbonsäuren, wie z.B. Benzeosäure, Cyclohexancarbonsäure, 2-Ethylhexansäure, Capronsäure, Caprylsäure, Caprinsäure, Laurinsäure, natürliche und synthetische Fettsäuren.

Bei der Herstellung der Polyesterpolyole a) können jeweils beliebige Gemische der Monomerbestandteile 1) bis 6) zum Einsatz kommen, mit der Maßgabe, dass die Auswahl so erfolgt, dass die resultierenden Polyester sowohl OH-Zahlen im Bereich von 20 bis 240 mg KOH/g bei Säurezahlen von <20 mg KOH/g als auch Glasübergangstemperaturen von -40 bis +100°C aufweisen.

Diese Bedingung wird dann erfüllt, wenn bei der Herstellung der Polyester ein geeignetes Verhältnis von "weichmachenden" Monomerbestandteilen, die zur Erniedrigung der Glasübergangstemperatur der Polyester führen, zu "hartmachenden" Monomeren, die zur Erhöhung der Glasübergangstemperatur führen, zur Anwendung kommt.

"Weichmachende" Monomerbestandteile sind beispielsweise aliphatische Diole, wie z.B. 1,4-Butandiol, 1,5-Pentandiol und 1,6-Hexandiol oder aliphatische Dicarbonsäuren, wie z.B. Adipinsäure oder Dodecandisäure.

"Hartmachende" Monomerbestandteile sind beispielsweise cyclische aromatische Dicarbonsäuren, wie z. B. Phthalsäure, Isophthalsäure und Terephthalsäure oder Diole, wie z.B. Cyclohexandiol-1,4, Cyclohexan-1,4-dimethanol oder Neopentylglykol.

Die Herstellung der Polyester a) erfolgt in an sich bekannter Weise nach Methoden, wie sie beispielsweise in "Ullmanns Enzyklopädie der technischen Chemie", Verlag Chemie Weinheim, 4. Auflage (1980), Band 19, Seiten 61 ff oder H. Wagner und H. F. Sarx in "Lack-kunstharze", Carl Hanser Verlag, München (1971), Seiten 86 bis 152, ausführlich beschrieben sind. Die Veresterung erfolgt gegebenenfalls in Gegenwart einer katalytischen Menge eines üblichen Veresterungskatalysators, wie beispielsweise Säuren wie z.B. p-Toluolsulfonsäure, Basen, wie z. B. Lithiumhydroxid oder Übergangsmetallverbindungen, wie z. B. Titantetrabutylat, bei ca. 80 bis 260°C, vorzugsweise 100 bis 240°C.

Die Veresterungsreaktion wird so lange durchgeführt, bis die angestrebten Werte für die Hydroxyl- und Säurezahl erreicht sind. Das Molekulargewicht der Polyesterpolyole kann aus der Stöchiometrie der Ausgangsmaterialien (unter Berücksichtigung der resultierenden Hydroxyl- und Säurezahlen) berechnet werden.

Die Komponente b) besteht aus mindestens einem Maleinsäuredi(cyclo)alkylester mit 1 bis 12, vorzugsweise 1 bis 8 und besonders bevorzugt 1 bis 4 Kohlenstoffatomen im (Cyclo)Alkylrest. Geeignet sind z.B. Maleinsäuredimethylester, Maleinsäurediethylester, Maleinsäuredi-n-butylester, Maleinsäuredi-2-ethylhexylester, Maleisäuredi-n-decylester, Maleinsäuredi-n-dodecylester und Maleisäuredicyclohexylester.

Die Komponente c) besteht aus mindestens einem (Cyclo)Alkylester der Acryl- und/oder Methacrylsäure mit 1 bis 18, vorzugsweise 1 bis 15 und besonders bevorzugt 1 bis 12 Kohlenstoffatomen im (Cyclo)Alkylrest, wie z.B. Methyl(meth)acrylat, Ethyl(meth)acrylat, Propyl(meth)acrylat, Isopropyl(meth)acrylat, n-Butyl(meth)acrylat, Isobutyl(meth)acrylat, tert.-Butyl(meth)acrylat, Cyclohexyl(meth)acrylat, 2-Ethylhexyl(meth)acrylat, Isobomyl(meth)acrylat, 3,3,5-Trimethylcyclohexyl(meth)acrylat, Stearyl(meth)acrylat und Benzyl(meth)acrylat.

Die Komponente d) besteht aus mindestens einem aromatischen, olefinisch ungesättigten Monomeren, wie z. B. Styrol, α-Methylstyrol und Vinyltoluol. Styrol ist bevorzugt.

Die Komponente e) besteht aus mindestens einem Hydroxyalkylester der Acryl- und/oder Methacrylasäure mit 2 bis 6 Kohlenstoffatomen im Hydroxyalkylrest und/oder deren Umsetungsprodukte eines maximalen Molekulargewichts von 500 mit ε-Caprolacton sowie Additionsprodukten von Acryl- und/oder Methacrylsäure und Monoepoxidverbindungen, die auch während der radikalischen Polymerisation in situ erzeugt werden können. Eingesetzt werden können z.B. Hydroxyethyl(meth)acrylat, Hydroxypropyl(meth)acrylat (bei der Anlagerung von Propylenoxid an (Meth)Acrylsäure entstehendes Isomerengemisch), Hydroxybutyl(meth)acrylat, Umsetzungsprodukte dieser Monomeren mit ε-Caprolacton bis zu einem maximalen Molekulargewicht von 500. Der Begriff "Hydroxyalkylester" soll somit auch Estergruppen aufweisende Reste umfassen, wie sie durch Anlagerung von ε-Caprolacton an einfache Hydroxyalkylester entstehen. Weiterhin sind auch Umsetzungsprodukte von Acryl- und/oder Methacrylsäure mit Monoepoxidverbindungen, die zusätzlich noch OH-Gruppen tragen können, als "Hydroxyalkylester der (Meth)Acrylsäure" anzusehen und daher ebenfalls als Monomere e) geeignet. Beispiele für geeignete Monoepoxide sind ®Cardura E 10 (Shell) , 2-Ethylhexylglycidylether und Glycidol (1,2-Epoxy-3-propanol). Diese Umsetzungsprodukte können auch unter den Reaktionsbedingungen der radikalischen Polymerisation in situ erzeugt werden. Die einfachen Hydroxyalkylester (ethyl, propyl und butyl) der Acryl- und/oder Methacrylsäure sind bevorzugt.

Die Komponente f) besteht aus mindestens einer olefinisch ungesättigten Carbonsäure, wie z.B. Acrylsäure, Methacrylsäure, Maleinsäure, Fumarsäure, Maleinsäure- und/oder Fumarsäurehalbester mit 1 bis 18 Kohlenstoffatomen im Alkoholrest. Bevorzugt sind Acryl- und Methacrylsäure.

Die Komponente g) besteht aus copolymerisierbaren, olefinisch ungesättigten Verbindungen, die von den Verbindungsklassen der Komponenten b) bis f) verschieden sind, wie beispielsweise α-Olefine, wie z. B. 1-Octen oder 1-Decen; Vinylester, wie z.B. Vinylacetat, Vinylpropionat, Vinylbutyrat, ®VeoVa 9 und ®VeoVa 10 von Shell; andere Vinylverbindungen, wie z. B. N-Vinylpyrrolidon, N-Vinylcaprolactam, N-Vinylcarbazol, aber auch mehrfach ungesättigte Verbindungen wie z.B. Hexandioldiacrylat, Trimethylolpropantriacrylat, Divinylbenzol, und Polybutadiene mit einem Molekulargewicht von 500 bis 10 000.

Die Herstellung der Polyolkomponente A) erfolgt durch radikalische Polymerisation der Komponenten b) bis g) entweder in einem inerten organischen Lösemittel oder lösemittelfrei in Substanz, z. B. in Gegenwart der Komponente a). Die Komponente a) wird zweckmäßigerweise vorgelegt, kann aber auch als Mischung mit den Monomerkomponenten b) bis g) bei der radikalischen Polymerisation zum Einsatz kommen. Es ist aber auch möglich, die Komponente a) nach der Polymerisation der Komponenten b) bis g) dem entstandenen fertigen Polymerisat zuzumischen. Bei der Herstellung der Polyolkomponente A) können als Einsatzstoffe a) bis g) innerhalb der oben angegebenen Mengenanteilsgrenzen jeweils beliebige Gemische verwendet werden, mit der Maßgabe, dass diese Auswahl so erfolgt, dass die resultierenden Polyolbindemittel Hydroxylzahlen und Glasübergangstemperaturen innerhalb der oben genannten Bereiche aufweisen.

Diese Bedingung wird dann erfüllt, wenn bei der Herstellung der Copolymerisate ein geeignetes Verhältnis von "weichmachenden" Monomeren, die zur Erniedrigung der Glasübergangstemperatur führen, zu "hartmachenden" Monomeren, die zur Erhöhung der Glasübergangstemperatur führen, zur Anwendung gelangt.

"Weichmachende" Monomere sind beispielsweise Alkylester der Acrylsäure, wie z.B. Ethylacrylat, n-Butylacrylat, Isobutylacrylat und 2-Ethylhexylacrylat.

"Hartmachende" Monomere sind beispielsweise kurzkettige (Cyclo)Alkylester der Methacrylsäure, wie z.B. Methylmethacrylat, Ethylmethacrylat, Isopropylmethacrylat, Isobutylmethacrylat, tert.-Butylmethacrylat, Cyclohexylmethacrylat, Neopentylmethacrylat, Isobornylmethacrylat und 3,3,5-Trimethylcyclohexylmethacrylat; Vinylaromaten, wie z.B. Styrol, Vinyltoluol und α-Methylstyrol.

Geeignete Initiatoren zur Durchführung der radikalischen Polymerisation sind übliche Radikalstarter, wie z.B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z.B. Acetyl-; Propionyl- oder Butyrylperoxid, mit Brom-, Nitro-, Methyl- oder Methoxygruppen substituierte Benzoylperoxide, Lauylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat, tert.-Butylperbenzoat; Hydroperoxide, wie beispielsweise tert.-Butylhydroperoxid, Cumolhydroperoxid; Dialkylperoxide, wie Dicumylperoxid, tert.-Butylcumylperoxid, Di-tert.-butylperoxid oder Di-tert.-amylperoxid.

Geeignete Lösemittel zur Herstellung der Polyolkomponente A) sind z.B. solche Lösemittel, die nach dem Emulgierschritt durch Vakuumdestillation aus der wässrigen Phase einer Dispersion entfernt werden können und vorzugsweise gegenüber Isocyanatgruppen inert sind. Beispielhaft genannt seien Ketone wie Aceton und Methylethylketon und Ester, wie Ethylacetat und Butylacetat sowie Aromaten, wie Toluol und Xylol.

Bei der Herstellung der Polyolbindemittel A) wird in einem Polymerisationsreaktor ein Reaktionsmedium für die radikalische Polymerisation vorgelegt und auf die gewünschte Polymerisationstemperatur aufgeheizt. Als Polymerisationsmedium kann z.B. ein Lösemittel bzw. eine Mischung der oben angegebenen Lösemittel dienen, falls zur Verwendung vorgesehen die Polyesterkomponente a) oder auch die Komponente b). Es ist auch möglich, beliebige Kombinationen aus Lösemittel und den Komponenten a) und/oder b) als Reaktionsmedium einzusetzen. Nachdem die gewünschte Polymerisationstemperatur erreicht ist, wird die Monomermischung, bestehend aus dem Komponenten c) bis g) und gegebenenfalls a) und/oder b) sowie der Radikalinitiator, vorzugsweise gleichzeitig beginnend, dem Reaktionsmedium zudosiert. Dabei werden die olefinisch ungesättigten Bestandteile der Monomermischung radikalisch copolymerisiert, wobei gegebenfalls eingesetzter Polyester a) durch Pfropfreaktionen, die unter den Reaktionsbedingungen mehr oder weniger stattfinden können, mit dem Copolymerisat chemisch verbunden wird. Die Polyesterkomponente a) weist vorzugsweise keine ungesättigten Doppelbindungen auf. Um jedoch spezielle Produkteigenschaften zu erzielen, kann es aber auch angezeigt sein, Polyester einzusetzen, die einen geringen Anteil polymcrisierbarer Doppelbindungen aufweisen und somit Copolymerisationsreaktionen eingehen können.

Die Polymerisationstemperatur liegt bei 80 bis 220°C, vorzugsweise bei 90 bis 200°C und besonders bevorzugt bei 120 bis 180°C.

Zur Regelung des Molekulargewichtes der Polyolbindemittel können übliche Regler bei der Durchführung der Polymerisation eingesetzt werden. Beispielhaft genannt seien als Regler Mercaptane, wie z.B. tert.-Dodecylmercaptan, n-Dodecylmercaptan und Mercaptoethanol.

Im Allgemeinen erfolgt die Polymerisation, insbesondere bei Mitverwendung von Lösemitteln der oben angegebenen Art, in einem geschlossenen Druckpolymerisationsreaktor mit automatischer Temperatursteuerung bei einem Druck von bis zu 20 bar. Bei lösemittelfreier Fahrweise und Verwendung von hochsiedenden Monomerbestandteilen kann die Polymerisation auch unter Atmosphärendruck durchgeführt werden.

Die nach dem beschriebenen Polymerisationsverfahren erhaltenen Polyolbindemittel A) stellen wertvolle Bindemittelkomponenten zur Herstellung der erfindungsgemäßen Bindemittelgemische dar und bilden den wesentlichen Polyolbestandteil der Dispersion (I), gegebenenfalls neben weiteren Hydroxylgruppen aufweisenden Komponenten C), die in untergeordneten Anteilen bei Bedarf neben der Polyolkomponente A) eingesetzt werden können.

Bei der Komponente B) handelt es sich um blockierte Polyisocyanate, vorzugsweise um (cyclo)aliphatische Biuret-, Isocyanurat-, Urethan-, Uretdion-, Allophanat-, und/oder Iminooxadiazindiongruppen aufweisende Polyisocyanate. Es können auch Polyisocyanate eingesetzt werden, die mehrere dieser genannten Gruppierungen enthalten. Zur Herstellung der Polyisocyanate können die bekannten (cyclo)aliphatischen Diisocyanate eingesetzt werden, aus denen die Polyisocyanate durch bekannte Verfahren, wie z.B. Trimerisation, Allophanatisierung, Urethanisierung, Biuretisierung hergestellt werden. Vorzugsweise finden Verwendung 1,6-Diisocyanatohexan (HDI), 1-Isocyanato-3,3,5-trimethyl-5-isocyanatomethylcyclohexan (Isophorondiisocyanat, IPDI), 2,4- und/oder 2,6-Diisocyanato-1-methylcyclohexan und 4,4-Diisocyanatodicyclohexylmethan (®Desmodur W, Bayer AG). Besonders bevorzugt werden zur Herstellung der Komponente B) Isocyanurat-, Biuret- und/oder Urethangruppen aufweisende Polyisocyanate auf Basis von 1,6 Diisocyanatohexan, Isophorondiisocyanat und ®Desmodur W eingesetzt.

Zur Herstellung der Polyisocyanatkomponente B) werden die oben genannten Polyisocyanate mit üblichen Blockierungsmitteln in einer an sich bekannten Blockierungsreaktion blockiert und gegebenenfalls hydrophil modifiziert.

Als Blockierungsmittel werden die bekannten monofunktionellen Blockierungsmittel eingesetzt, wie z.B. Malonsäuredimethylester, Malonsäurediethylester, Acetessigsäureethylester, ε-Caprolactam, Butanonoxim, Cyclohexanonoxim, 1,2,4-Triazol, Dimethyl-1,2,4-triazol, 3,5-Dimethylpyrazol, Imidazol, Di-n-propylamin, Diisopropylamin, Di-n-butylamin, Diisobutylamin oder Dicyclohexylamin. Bevorzugt eingesetzt werden Blockierungsmittel, die im Temperaturbereich bis 180°C, besonders bevorzugt bis 160°C abspalten. Bevorzugt sind Butanonoxim, Cyclohexanonoxim, 3,5-Dimethylpyrazol und 1,2,4-Triazol.

Falls die Polyisocyanatkomponente B) hydrophil modifiziert wird, geschieht dies nach an sich bekannten Methoden, d.h. in dem ein Teil der Isocyanatgruppen mit Hydroxycarbonsäuren, z.B. 2,2-Dimethylolpropionsäure oder 3-Hydroxy 2,2-dimethylpropansäure (Hydroxypivalinsäure) und/oder mit monofunktionellen Polyethern mit einem Gehalt an Ethylenoxid von mindestens 70 Gew.-% umgesetzt wird. Bei Modifizierung mit Hydroxycarbonsäuren ist für die Lösung bzw. Dispergierung in Wasser die zumindest teilweise Neutralisation mit bevorzugt einem Amin erforderlich, um ionische Gruppen zu erzeugen.

Zur Herstellung der Vernetzerkomponente B) wird das Polyisocyanat nacheinander in beliebiger Reihenfolge oder gleichzeitig mit dem Blockierungsmittel und/oder der Hydroxycarbonsäure und/oder dem Polyether umgesetzt. Vorzugsweise werden die Polyisocyanate nicht hydrophiliert sondern nur blockiert. Es kann hierbei sowohl ein geringer Überschuss als auch ein geringer Unterschuss an Blockierungsmittel zum Einsatz gelangen. Bei einem Unterschuss an Blockierungsmittel kann auch weitergearbeitet werden, wenn noch kleine Anteile an nicht umgesetzten Isocyanatgruppen im Reaktionsgemisch vorhanden sind. Die Umsetzungen erfolgen in der Regel in einem Temperaturbereich von 10 bis 120°C, vorzugsweise bei 20 bis 120°C, wobei besonders die Umsetzungen mit Hydroxycarbonsäuren unter milden Bedingungen durchgeführt werden, um zu verhindern, dass auch die Carboxylgruppe mit den Isocyanatgruppen reagiert.

Die Umsetzungen können lösemittelfrei oder in einem inerten Lösemittel durchgeführt werden. Bevorzugt ist die Umsetzung in inerten Lösemitteln, wobei vorzugsweise die zuvor genannten Lösemittel zur Anwendung gelangen, insbesondere Ethylacetat, Butylacetat, Aceton und Methylethylketon, Toluol und Xylol.

Nach beendeter Umsetzung erfolgt, falls eine Hydrophilierung mit einer Carbonsäure stattgefunden hat, gegebenenfalls zumindestens teilweise eine Neutralisation der eingebauten Carboxylgruppen mit einem Neutralisationsmittel. Geeignete Neutralisationsmittel sind Alkali- oder Erdalkalihydroxide, bevorzugt aber Ammoniak und Amine, wie z.B. Triethylamin, Triethanolamin, N-Methylmorpholin, und besonders bevorzugt N,N-Dimethylethanolamin. Im allgemeinen werden die gegebenenfalls vorliegenden Carboxylgruppen zumindest 50 % neutralisiert, wobei gegebenenfalls auch ein Überschuss an Neutralisationsmittel zum Einsatz kommen kann.

Bei den gegebenenfalls zur Anwendung kommenden weiteren Polyolen C) handelt es sich um Substanzen mit mindestens einer Hydroxylgruppe, wie z.B. die bei der Herstellung der Polyesterpolyole schon beschriebenen niedermolekularen Alkohole, weiterhin Polyetheralkohole mit 1 bis 6 Hydroxylendgruppen, Polyurethanpolyole mit mindestens einer Hydroxylendgruppe, weitere Polyester- und/oder Polyacrylatpolyole oder ε-Caprolactonpolyester mit mindestens einer Hydroxylendgruppe.

Bei der gegebenenfalls zum Einsatz kommenden zusätzlichen Vernetzerkomponente D) handelt es sich um Substanzen, die wie die Vernetzersubstanzen B) durch chemische Reaktion mit den Hydroxylgruppen der Komponente A) und gegebenenfalls C) zu einer Aushärtung der erfindungsgemäßen Überzüge führen. Beispielhaft zu nennen sind Aminoplastharze, z.B. entsprechende Melamin-Derivate, wie alkoxylierte Melaminharze oder Melamin-Formaldehyd-Kondensationsprodukte (z.B. FR-A 943 411, "The Chemistry of Organic Filmformers", Seiten 235 - 240, John Wiley & Sons Inc., New York 1974) und übliche Vernetzungsmittel, z. B. mit alkoholischen Hydroxylgruppen reaktionsfähige Epoxide, Carbonsäureanhydride, Phenolplastharze, Resolharze, Harnstoffharze oder Guanidinharze bzw. deren Gemische.

Bei den gegebenenfalls zur Anwendung kommenden externen Emulgatoren E) handelt es sich um übliche Emulgatoren bzw. Dispergiermittel, wie sie beispielsweise von Johann Bielmann in Lackadditive, WILEY-VCH Verlag GmbH Weinheim, New York, Chichester, Brisbane, Singapore, Toronto 1998, Seiten 87-92 beschrieben sind. Besonders geeignet als Substanzen E) sind beispielsweise Anlagerungsprodukte von Ethylenoxid und gegebenenfalls Propylenoxid an hydrophobe Startermoleküle, wie z.B. Nonylphenol, Phenol/Styrolkondensate und langkettige, gegebenenenfalls verzweigte, Alkohole, wie Laurylalkohol oder Stearylalkohol. Aber auch ionische Verbindungen dieser Art, wie beispielsweise Ethylenoxid- und gegebenenfalls Propylenoxideinheiten aufweisende Schwefel- oder Phosphorsäureestersalze, wie z.B. in der WO 97/31960 beschrieben, sind als Substanzen E) geeignet.

Bei den gegebenenfalls zum Einsatz kommenden üblichen Zusatzmitteln F) handelt es sich beispielsweise um Neutralisationsmittel, Katalysatoren, Hilfsstoffe und/oder Additive, wie z.B. Entgasungsmittel, Netz- und Dispergiermittel, Verlaufsmittel, Radikalfänger, Antioxidatien und/oder UV-Absorber, Verdicker, geringe Anteile an Lösemitteln und Bioziden.

Bei der Polyhydroxylkomponente II) handelt es sich beispielsweise um in Wasser lösliche oder dispergierbare Polyhydroxylverbindungen eines durch Gelpermeationschromatographie (Standard Polystyrol) bestimmbaren zahlengemittelten mittleren Molekulargewichts von 1 000 bis 100 000, vorzugsweise 2 000 bis 20 000, der an sich aus der Chemie der Polyurethanlacke bekannten Art, vorausgesetzt die Polyhydroxylverbindungen weisen einen zu ihrer Löslichkeit bzw. Dispergierbarkeit in Wasser ausreichenden Gehalt an hydrophilen Gruppierungen, insbesondere Carboxylatgruppen und/oder Ethylenoxideinheiten aufweisende Polyetherketten auf. Grundsätzlich möglich ist allerdings auch die Verwendung von für sich allein nicht ausreichend hydrophilen Polyhydroxylverbindungen in Abmischung mit externen Emulgatoren.

Als Komponente II) in Betracht kommen Polyhydroxypolyester, Polyhydroxypolyether, Polyhydroxypolyurethane, Polyhydroxycarbonate, urethanmodifizierte Polyesterpolyole, urethanmodifizierte Polyetherpolyole, urethanmodifizierte Polycarbonatpolyole oder Hydroxylgruppen aufweisende Polymerisate, d. h. die an sich bekannten Polyhydroxypolyacrylate. Es können jedoch auch Mischungen dieser genannte Polyhydroxylverbindungen, bzw. in situ hergestellte, gegebenenfalls gepfropfte, Vertreter von Kombinationen dieser Polyhydroxylverbindungen, wie z.B. Polyesterpolyacrylatpolyole, Polyetherpolyacrylatpolyole, Polyurethanpolyacrylatpolyole, Polyesterpolyurethane, Polyetherpolyurethane, Polycarbonatpolyurethane und Polyetherpolyester oder deren Mischungen als Komponente II) zum Einsatz kommen.

Bei den Polyacrylatpolyolen handelt es sich um an sich bekannte Mischpolymerisate von einfachen Estern der Acryl- und/oder Methacrylsäure, wobei zur Einführung der Hydroxylgruppen Hydroxyalkylester wie beispielsweise 2-Hydroxyethyl-, die 2-Hydroxypropyl-, 2-, 3-, oder 4-Hydroxybutylester dieser Säuren mitverwendet werden und zur Einführung von Carboxylgruppen, die zur Überführung in Carboxylatgruppen mit Aminen neutralisiert werden können, werden Acryl- und/oder Methacrylsäure mitverwendet. Als mögliche weitere Comonomere kommen olefinisch ungesättigte Verbindungen in Betracht, wie z.B. Vinylaromaten, Acrylnitril, Maleinsäuredi(cyclo)alkylester, Vinylester, Vinylether u.s.w..

Die Polymerisate können einerseits direkt in Wasser unter Zuhilfenahme von Emulgatoren hergestellt werden, wobei Emulsionscopolymerisate entstehen, die auch "Primärdispersionen" genannt werden. Andererseits ist auch die Herstellung in organischen Lösemitteln und, nach Einführung ionischer Gruppen, anschließende Überführung in die wässrige Phase möglich, wobei sogenannte "Sekundärdispersionen" erhalten werden.

Geeignete Polyetherpolyole sind die aus der Polyurethanchemie an sich bekannten Ethoxylierungs- und/oder Propoxylierungsprodukte geeigneter 2- bis 6-wertiger Startermoleküle wie z.B. Wasser, Ethylenglykol, Propandiol, Trimethylolpropan, Glycerin, Pentaerythrit und/oder Sorbit.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der soeben beispielhaft genannten Art mit unterschüssigen Mengen Polycarbonsäuren bzw. Polycarbonsäureanhydriden, insbesondere Dicarbonsäuren bzw. Dicarbonsäureanhydriden. Geeignete Polycarbonsäuren bzw. Polycarbonsäureanhydride sind beispielsweise Adipinsäure, Phthalsäure, Isophthalsäure Phthalsäureanhydrid, Tetrahydrophthalsäureanhydrid, Hexahydrophthalsäureanhydrid, Maleinsäure, Maleinsäureanhydrid, deren Diels Alder-Addukte mit Cyclopentadien, Fumarsäure oder dimere bzw. trimere Fettsäuren. Um spezielle Molgewichte bzw. Funktionalitäten der Polyesterpolyole einzustellen, besteht auch die Möglichkeit der Verwendung von monofunktionellen Alkoholen, wie z.B. 2-Ethylhexanol oder Cyclohexanol und/oder monofunktionellen Carbonsäuren, wie z.B. 2-Ethylhexansäure, Benzoesäure oder Cyclohexancarbonsäure. Bei der Herstellung der Polyesterpolyole können selbstverständlich beliebige Gemische von mono- und polyfunktionellen Alkoholen oder beliebige Gemische von mono- und polyfunktionellen Carbonsäuren bzw. Carbonsäureanhydriden eingesetzt werden.

Die Herstellung der Polyesterpolyole erfolgt nach bekannten Methoden, wie sie z.B. in Houben-Weyl, Methoden der organischen Chemie, Band XIV/2, G. Thieme-Verlag, Stuttgart, 1963, Seiten 1 bis 47 beschrieben sind.

Die gegebenenfalls erforderliche hydrophile Modifizierung dieser Polyesterpolyole erfolgt nach an sich bekannten Methoden, wie sie beispielsweise in EP-A 0 157 291 oder EP-A 0 427 028 offenbart sind. Die in diesen Veröffentlichungen beschriebenen, in Wasser löslichen bzw. dispergierbaren, urethanmodifizierten Polyester sind erfindungsgemäß als Komponente II) besonders geeignet. Besonders bevorzugt als Komponente II) kommen urethanmodifizierte Polyesterharze in Betracht, wie sie in der DE-A 42 21 924 beschrieben sind. Ebenfalls geeignet, jedoch weniger bevorzugt, sind die in der DE-A 38 29 587 beschriebenen, in Wasser löslichen oder dispergierbaren Hydroxylgruppen aufweisenden Polyacrylate.

Als polyfunktionelle Vernetzerharze III) kommen sowohl in Wasser lösliche oder dispergierbare blockierte Polyisocyanate als auch in Wasser lösliche oder dispergierbare Aminoharze, wie z. B. Melaminharze, in Betracht. Prinzipiell geeignet sind die in Wasser löslichen oder dispergierbaren Polyisocyanate, wie sie auch schon zuvor im Stand der Technik genannt wurden. Besonders geeignet sind jedoch die in Wasser löslichen oder dispergierbaren blockierten Polyisocyanate, die in der DE-A 42 21 924 und der DE-A 198 10 660 beschrieben sind.

Es ist auch möglich, schon fertige Mischungen von Vertretern der Komponenten II) und III) als Kombinationspartner für die Komponente I) zu verwenden. Solche fertigen Mischungen befinden sich aufgrund ihrer guten Lagerstabilität bei Raumtemperatur bereits im Praxiseinsatz.

Als weitere, in Wasser dispergierbare Substanzen IV) können beispielsweise Epoxidharze, Phenolharze, Polyaminharze, niedermolekulare Epoxyvemetzer und niedermolekulare Polyaminvernetzer zur Anwendung kommen.

Die wässrigen selbstvernetzenden Dispersionen (I) können entweder nach einem Direktdispergierverfahren oder nach dem Phasenumkehrverfahren hergestellt werden.

Für die Herstellung der Dispersionen I) durch Dispergierprozesse gelangen Dispergiervorrichtungen mit hoher volumenbezogener Dispergierleistung, wie z.B. Druckentspannungshomogenisierdüsen, zur Anwendung.

Entsprechende Dispergiermaschinen sind z.B. aus Formation of Emulsions, in P. Beche, Encyclopedia of Emulsion Technology, Vol. 1, New York, Basel, Decker 1983; bekannt. wurden aber zur Herstellung von solchen wässrigen Dispersionen für wässrige Einbrennfüller bisher noch nicht eingesetzt.

Dispergiermaschinen werden nach der Größe der volumenbezogenen Leistung ausgewählt. Zur Herstellung von feinteiligen Dispersionen (ca. 1 µm Teilchendurchmesser) sind Dispergiermaschinen mit hohen volumenbezogenen Leistungen erforderlich, z.B. Hochdruckhomogenisatoren. Mit Rotor/Stator-Maschinen lassen sich so feinteilige Dispersionen nicht mehr gut herstellen. Bei dem in der EP-A 0 101 007 beschriebenen Strahldispergator handelt es sich um eine spezielle Druckentspannungsdüse, die einen wesentlich höheren Wirkungsgrad als Hochdruckhomogenisatoren hat. Schon bei 50 bar Homogenisierdruck werden mit dem Strahldispergator Partikelgrößenverteilungen erreicht, für die man bei dem Hochdruckhomogenisator 200 bar benötigt.

Mit dem Strahldispergator als Dispergiervorrichtung lassen sich besonders vorteilhaft feinteilige Dispersionen, sowohl kontinuierlich als auch diskontinuierlich herstellen.

Erfindungsgemäß kann so auch die wässrige Dispersion durch Phasenumkehr von einer Wasser-in-Öl in eine Öl-in-Wasser-Emulsion überführt werden.

Die wässrigen Dispersionen I) werden in Kombination mit den Komponenten II), III) und gegebenenfalls IV) zur Einbrennlackierung auf beliebigen, hitzeresistenten Substraten verwendet, z.B. als Füller, Basis- oder Decklacke zur Herstellung von Einschicht- und/oder Mehrschichtlackierungen, beispielsweise auf dem Kraftfahrzeugsektor. Die bevorzugte Verwendung liegt im Füllerbereich.

Zur Herstellung der wässrigen, selbstvemetzenden Dispersion (I) werden die beschriebenen Komponenten A), B) und gegebenenfalls C) bis F) miteinander gemischt, vorzugsweise in den bereits genannten Lösemitteln. Bevorzugt als Lösemittel sind Ethylacetat und Methylethylketon, besonders bevorzugt ist Methylethylketon. Selbstverständlich können auch die Komponenten A) und B) direkt in Lösung hergestellt werden und anschließend diese Lösungen vermischt werden. Besonders bevorzugt werden die Komponenten A) und B) in Methylethylketon hergestellt und dann vermischt.

In diese Lösung von A) und B) können, falls erforderlich und noch nicht vorher geschehen, gegebenenfalls weitere polyfunktionelle Vernetzersubstanzen, Neutralisationsmittel, geringe Mengen externer Emulgatoren sowie weitere Hilfs- und Zusatzstoffe, wie z.B. Verdickungsmittel, Verlaufsmittel, Lichtschutzmittel und/oder Katalysatoren, eingebracht werden. Danach erfolgt die Vermischung der organischen Lösung mit Wasser zur Herstellung der wässrigen Suspensionen. Dies geschieht entweder nach dem Direktdispergierverfahren, wobei die organische Phase in die wässrige Phase dispergiert wird, oder nach dem Phasenumkehrverfahren, wobei eine zunächst vorliegende Wasser-in-Öl-Emulsion in eine Öl-in-Wasser-Emulsion überführt wird. Dies geschieht unter Zuhilfenahme einer Dispergiervorrichtung mit hoher volumenbezogener Dispergierleistung. Dabei kann es sich z.B. handeln um Käfigrührer, Dissolver, Rotor/Stator-Mischer, Druckentspannungsdüsen, bevorzugt Strahldispergatoren, wobei die volumenbezogene Dispergierleistung für den Dispergierprozess bei 1 bis 10⁸ W/cm³, vorzugsweise 1 bis 5·10⁷ W/cm³ und besonders bevorzugt 1 bis 3·10⁷ W/cm³ liegt. Die mittlere Teilchengröße der Partikel der wässrigen Dispersionen bzw. Suspensionen liegt bei 0,05 bis 10 µm, vorzugsweise 0,1 bis 5 µ, insbesondere 0,15 bis 2,5 µm und besonders bevorzugt 0,2 bis 1,5 µm.

Um spezielle Teilchengrößenverteilungen zu erhalten ist es sinnvoll bzw. vorteilhaft, in mehreren Stufen bei definierter volumenbezogener Leistung zu dispergieren.

Es hat sich als vorteilhaft erwiesen, vor dem Dispergiervorgang durch den Strahldispergator erst eine Voremulsion mittels eines Rührers oder Dissolvers herzustellen und diese Voremulsion dann dem Strahldispergator zuzuführen. Bei der Herstellung der Dispersionen bzw. Emulsionen wird eine solche Menge Wasser verwendet, dass 20 bis 75 Gew.-%ige, vorzugsweise 30 bis 70 Gew.-%ige und besonders bevorzugt 35 bis 70 Gew.-%ige Dispersionen bzw. Emulsionen der erfindungswesentlichen Bindemittelmittel I) resultieren. Nach beendeter Wasserzugabe wird das Lösemittel vorzugsweise im Vakuum destillativ entfernt.

Die Dispergierung kann in einem breiten Temperaturbereich sowohl bei tiefer Temperatur, wie z.B. 10°C, als auch bei höher Temperatur bis deutlich oberhalb des Schmelzpunktes der Polymermischung, wie z.B. 150°C, erfolgen. Bei solchen hohen Temperaturen ist aufgrund der Reaktivität der Bindemittelsysteme nur eine kurzfristige Temperaturbelastung im Sekundenbereich möglich.

Grundsätzlich möglich wäre jedoch auch eine Vorgehensweise zur Herstellung der wässrigen Dispersionen bzw. Suspensionen, die darin besteht, freie Carboxyl- und Hydroxylgruppen und blockierte Isocyanatgruppen aufweisende Mischungen von A) und B), gegebenenfalls in Form einer organischen Lösung in einem der beispielhaft genannten Lösemittel, mit einer wässrigen Lösung eines Neutralisationsmittels der genannten Art zu vermischen, so dass Neutralisation und Löse- bzw. Dispergiervorgang einstufig erfolgen.

Das Mischungsverhältnis der Polyhydroxylkomponente A) zu der blockierten Polyisocyanatkomponente B) wird so gewählt, dass das Äquivalentverhältnis von blockierten Isocyanatgruppen der Komponente B) zu alkoholischen Hydroxylgruppen der Komponente A) bei 0,5:1 bis 2:1, vorzugsweise bei 0,6:1 bis 1,8:1 und besonders bevorzugt bei 0,7:1 bis 1,5:1 liegt.

Weitere polyfunktionelle Hydroxylverbindungen C), polyfunktionelle Vernetzer D), externe Emulgatoren E) und übliche Zusatzmittel F) können dem wässrigen Bindemittelgemisch aber auch den Einzelkomponenten A) und B) vor der Vereinigung bzw. schon bei der Herstellung oder der Mischung aus A) und B) vor der Dispergierung zugegeben werden. Im Falle von wasserlöslichen oder dispergierbaren Substanzen C) bis F) können diese auch nach der Dispergierung und Destillation der wässrigen Phase zugesetzt werden.

Zur Herstellung der erfindungsgemäßen Bindemittelgemische, insbesondere Füllern, werden die Dispersionen I) mit den Polyhydroxylverbindungen II), den Vernetzern III) und gegebenenfalls Vertretern der Komponente IV) gemischt. Das Mischungsverhältnis bezüglich der Komponenten I) bis III) liegt im Bereich von 90:5:5 bis 10:45:45 Gew.-%, vorzugsweise 85:7,5:7,5 bis 15:42,5:42,5 Gew.-% und besonders bevorzugt 80:10:10 bis 20:40:40 Gew.-% bezogen auf Feststoff. Vertreter der Komponente IV) können gegebenenfalls in Anteilen bis zu 20 Gew.-%, vorzugsweise 10 Gew.-%, bezogen auf Feststoff, zum Einsatz kommen. Besonders bevorzugt werden nur Mischungen der Komponenten I) bis III) eingesetzt. Die so erhaltenen Einkomponenten-Bindemittel sind im allgemeinen beliebig lange lagerfähig. Gegebenenfalls mitzuverwendende Hilfs- und Zusatzmittel der Beschichtungstechnologie, wie beispielsweise Pigmente, Füllstoffe, Verlaufsmittel, Netz- und Dispergiermittel, blasenverhindernde Mittel, Katalysatoren und dergleichen können dem wässrigen Bindemittel bzw. Bindemittelgemisch und/oder den Einzelkomponenten I), II), III) und gegebenenfalls IV) zugesetzt werden. Von besonderem Vorteil ist es, die Einzelkomponenten I), II), III) und gegebenenfalls IV) oder I) und die Mischung aus II) und III) mit Hilfsmitteln, Pigmenten und Füllstoffen zu gebrauchsfertigen Pasten zu verarbeiten, die dann beliebig innerhalb der oben genannten Grenzen miteinander gemischt werden können. Auf diese Weise lassen sich ganz spezielle Eigenschaften für spezielle Anforderungen erzielen. Es besteht auch die Möglichkeit, manche Additive, wie z.B. Verlaufsmittel oder Katalysatoren, der Komponente I) schon vor deren Dispergierung in Wasser zuzusetzen.

Die die Dispersionen I) enthaltenden erfindungsgemäßen Einkomponenten-Beschichtungsmittel können nach allen beliebigen Methoden der Beschichtungstechnologie, wie z.B. Spritzen, Streichen, Tauchen, Fluten oder mit Hilfe von Walzen und Rakeln, auf beliebige hitzeresistente Substrate ein- oder mehrschichtige aufgetragen werden.

Man erhält beispielsweise Überzüge auf Metall, Kunststoff, Holz oder Glas durch Aushärten des Lackfilms bei 80 bis 220°C, vorzugsweise 100 bis 200°C und besonders bevorzugt 120 bis 180°C.

Die erfindungsgemäßen Bindemittel eignen sich vorzugsweise zur Herstellung von Überzügen und Lackierungen auf Stahlblechen, wie sie beispielsweise zur Herstellung von Fahrzeugkarosserien, Maschinen, Verkleidungen, Fässern oder Containern Verwendung finden. Sie werden bevorzugt verwendet für die Herstellung von Automobilfüllern. Die Lackfilme haben im allgemeinen eine Trockenschichtdicke von 0,01 bis 0,3 mm.

Die erfindungsgemäßen Bindemittel ergeben einen langanhaltenden Oberflächenschutz, wie in den Beispielen demonstriert wird. Besonders die überraschend hohe Schlagfestigkeit bei gleichzeitig hoher Filmhärte, was an sich gegensätzliche Eigenschaften sind, ist hervorzuheben. Dies macht die Bindemittel für Anwendungen, bei denen ein guter Steinschlagschutz gepaart mit einer hohen Lackfilmhärte erforderlich ist, in hervorragender Weise geeignet.

Der besondere Vorteil der neuen wässrigen Bindemittel ist neben ihrer hohen Stabilität bei Lagerung sowohl bei Raumtemperatur als auch bei leicht erhöhten Temperaturen von 30 bis 60°C der zu erzielende besonders hohe Festgehalt von ≥55 Gew.-% unter Applikationsbedingung, was von bisher bekannten wässrigen Bindemitteln in aller Regel nicht erreicht wird.

Die nachfolgenden Beispiele erläutern die Erfindung, ohne sie jedoch einzuschränken.

### Beispiele

Alle Prozentangaben beziehen sich, falls nicht anders vermerkt, auf das Gewicht.

### 1. Herstellung der erfindungswesentlichen Dispersionen I)

### Polyolkomponente A)

### Allgemeine Arbeitsvorschrift zur Herstellung eines Polyester-Polyacrylatpolyols, bzw. Polyacrylatpolyols:

In einem 10 l Edelstahldruckreaktor mit Rühr-, Kühl- und Heizvorrichtung sowie elektronischer Temperatursteuerung wird Teil I unter Stickstoffatmosphäre vorgelegt und auf Reaktionstemperatur aufgeheizt. Dann werden in den geschlossenen Reaktor gleichzeitig beginnend Teil II (Zugabe über einen Zeitraum von insgesamt 3 Stunden) und Teil III (Zugabe über einen Zeitraum von insgesamt 3,5 Stunden) bei konstanter Temperatur des Reaktorinhalts zudosiert. Nach Zugabe von Teil III wird 1 Stunde bei der Polymerisationstemperatur nachgerührt. Dann wird die entstandene Harzlösung auf 30°C abgekühlt und filtriert.

Die Reaktionstemperaturen und die Zusammensetzungen der Teile I bis III sind in Tabelle 1 zusammen mit den Kenndaten der erhaltenen Produkte aufgeführt.

### Ausgangsmaterial:

Polyester: Polyesterpolyol der Hydroxylzahl 98 mg KOH/g und der Säurezahl 1,5 mg KOH/g, hergestellt durch Umsetzung von 22,07 Gew.-Teilen 2-Ethylhexansäure, 30,29 Gew.-Teilen Trimethylolpropan, 12,67 Gew.-Teilen Neopentylglykol, 32,24 Gew.-Teilen Hexahydrophthalsäureanhydrid und 12,29 Gew.-Teilen Adipinsäure.

**Tabelle 1:**

| Polyole A) der erfindungswesentlichen Bindemittel I) (Mengenangaben in g) | | | |
|---|---|---|---|
| **Polyol** | **A1** | **A2** | **A3** |
| Teil I | | | |
| Methylethylketon | 2000 | 2000 | 2000 |
| Polyester | 568 | - | - |
| Maleinsäuredimethylester | 284 | - | - |

| Teil II | | | |
|---|---|---|---|
| Methylmethacrylat | 1136 | 1136 | 1562 |
| Styrol | 2037 | 1673 | 1673 |
| Hydroxyethylmethacrylat | 922 | 1735 | 1735 |
| Butylmethacrylat | 568 | - | - |
| Butylacrylat | - | 852 | 426 |
| Acrylsäure | 51 | 57 | 57 |

| Teil III | | | |
|---|---|---|---|
| Di-tert-butylperoxid | 114 | 227 | 227 |
| Methylethylketon | 320 | 320 | 320 |
| Polymerisationstemperatur | 160 °C | 160 °C | 160 °C |
| | | | |

| Kenndaten: | | | |
|---|---|---|---|
| Festgehalt, % | 69,1 | 69.7 | 69,1 |
| Viskosität bei 23 °C, mPa·s | 1940 | 1200 | 1490 |
| Säurezahl, mg KOH/g | 5,6 | 7,5 | 7,6 |
| OH-Zahl, mg KOH/g | 56 | 92 | 91 |
| OH-Gehalt Festharz, % | 2,46 | 4,0 | 4,0 |
| Hazen-Farbzahl, APHA | 40 | 10 | 20 |

### Herstellung der Vernetzerkomponente B)

### Polyisocyanat 1:

In einem 2 l-Vierhalskolben mit Rührer, Gaseinleitungsrohr, Innenthermometer, Tropftrichter und Rückflusskühler, werden 1332 g Isophorondiisocyanat (IPDI) unter Stickstoff vorgelegt und auf 80°C erwärmt. Aus einem Tropftrichter werden innerhalb von 45 Minuten 15 ml einer 5 Gew.-%igen Lösung von 2-Hydroxypropyltrimethylammoniumhydroxid in 2-Ethyl-1,3-hexandiol/Methanol (6:1, Gew.-Teile) langsam und gleichmäßig zugetropft. Hierbei steigt die Temperatur auf 88°C (90°C sollten nicht überschritten werden, weil die Trimerisierung bei zu hohen Temperaturen unspezifisch verläuft und zu höheren Viskositäten des Endprodukts führt). Es wird nach Beendigung des Zutropfens so lange bei 80°C gerührt, bis die Reaktionsmischung einen NCO-Gehalt von 30,6 % erreicht hat. Dann stoppt man durch Zugabe von 0,36 g (70 ppm molar) einer 25 %igen Lösung von Dibutylphosphat in IPDI ab. Überschüssiges monomeres IPDI wird durch Dünnschichtdestillation entfernt. Man erhält ein nahezu farbloses, klares Harz mit einer Ausbeute von 44 %, das 70 %ig in Methylethylketon gelöst wird. Die Viskosität der Lösung bei 23°C liegt bei 300 mPa·s, der Isocyanatgehalt beträgt 11,8 % und der Gehalt an freiem, monomerem IPDI liegt bei 0,18 %.

### Polyisocyanat 2:

®Desmodur N 3300 (Bayer AG), Festgehalt: 100 %; Viskosität bei 23°C: 3500 mPa·s; Isocyanatgehalt: 21,8 %.

### Polyisocyanat 3:

In einem 2 l-Vierhalskolben mit Rührer, Gaseinleitungsrohr, Innenthermometer und Rückflusskühler, werden 524,00 g 4,4'-Diisocyanatodicyclohexylmethan (®Desmodur W, Bayer AG) und 146,24 g 2,2,4-Trimethyl-1,3-pentandiol unter Stickstoff vorgelegt und auf 100°C erwärmt. Unter Rühren wird 1 ml Dibutylzinndilaurat so langsam zugetropft (exotherme Reaktion), dass eine Temperatur von 120°C nicht überschritten wird. Nach Beendigung des Zutropfens wird der Ansatz so lange bei 100°C gerührt, bis die Reaktionsmischung einen NCO-Gehalt von 12,5 % erreicht hat. Man erhält ein nahezu farbloses, klares Harz, das nach Abkühlung auf 75°C in 445,83 g Methylethylketon gelöst wird. Die Auslaufzeit der 60 %igen Lösung beträgt 23 s (ISO 4-Becher, 23°C) und der Isocyanatgehalt beträgt 7,5 %.

### Herstellung eines blockierten Polyisocyanats B 1:

500 g Polyisocyanat 1 werden in einem 1 l-Vierhalskolben mit Rührer, Innenthermometer und Rückflusskühler vorgelegt und auf 60°C erwärmt. 134,86 g 3,5-Dimethylpyrazol werden unter Rühren portionsweise zugegeben und dann so lange bei 60°C gerührt, bis im IR-Spektrum keine Isocyanatbande mehr zu sehen ist.

### Herstellung eines blockierten Polyisocyanats B 2:

500 g Polyisocyanat 1 werden in einem 1 l-Vierhalskolben mit Rührer, Innenthermometer, Rückflusskühler und Tropftrichter vorgelegt und auf 60°C erwärmt. Dann werden 122,22 g Butanonoxim unter Rühren innerhalb von 30 Minuten zugetropft. Es wird so lange bei 60°C gerührt, bis im IR-Spektrum keine Isocyanatbande mehr zu sehen ist.

### Herstellung eines blockierten Polyisocyanats B 3:

500 g Polyisocyanat 1 werden in einem 1 l-Vierhalskolben mit Rührer, Innenthermometer und Rückflusskühler vorgelegt und auf 60°C erwärmt. 158,74 g Cyclohexanonoxim werden unter Rühren portionsweise zugegeben und dann so lange bei 60°C gerührt, bis im IR-Spektrum keine Isocyanatbande mehr zu sehen ist.

### Herstellung eines blockierte Polyisocyanats B 4:

350 g Polyisocyanat 2 werden in einem 1-l-Vierhalskolben mit Rührer, Innenthermometer und Rückflusskühler mit 150 g Methylethylketon versetzt und unter Rühren auf 50°C erwärmt. Dann werden 205,28 g Cyclohexanonoxim portionsweise zugegeben und bei 50°C so lange gerührt, bis im IR-Spektrum keine Isocyanatbande mehr zu sehen ist.

### Herstellung eines blockierten Polyisocyanats B 5:

385,40 g Polyisocyanat 2 werden in einem 1 l-Vierhalskolben mit Rührer, Innenthermometer und Rückflusskühler vorgelegt und auf 60°C erwärmt. 192,26 g 3,5-Dimethylpyrazol werden unter Rühren portionsweise zugegeben und dann so lange bei 60°C gerührt, bis im IR-Spektrum keine Isocyanatbande mehr zu sehen ist.

### Herstellung eines blockierten Polyisocyanats B 6:

385,40 g Polyisocyanat 2 werden in einem 1 l-Vierhalskolben mit Rührer, Innenthermometer und Rückflusskühler vorgelegt und auf 60°C erwärmt. 138,14 g 1,2,4-Triazol werden unter Rühren portionsweise zugegeben und dann so lange bei 60°C gerührt, bis im IR-Spektrum keine Isocyanatbande mehr zu sehen ist.

### Herstellung eines blockierten Polyisocyanats B 7:

560,00 g Polyisocyanat 3 werden in einem 1 l-Vierhalskolben mit Rührer, Innenthermometer und Rückflusskühler vorgelegt und auf 60°C erwärmt. 96,13 g 3,5-Dimethylpyrazol werden unter Rühren portionsweise zugegeben und dann so lange bei 60°C gerührt, bis im IR-Spektrum keine Isocyanatbande mehr zu sehen ist.

### Herstellung eines blockierten Polyisocyanats B 8:

560,00 g Polyisocyanat 3 werden in einem 1 l-Vierhalskolben mit Rührer, Innenthermometer und Rückflusskühler vorgelegt und auf 60°C erwärmt. 69,07 g 1,2,4-Triazol werden unter Rühren portionsweise zugegeben und dann so lange bei 60°C gerührt, bis im IR-Spektrum keine Isocyanatbande mehr zu sehen ist.

### Herstellung der erfindungswesentlichen wässrigen Dispersionen I)

### Dispersion I.1):

397,2 g des Polyesterpolyacrylatpolyols A 1 und 190,4 g des blockierten Polyisocyanats B 1 werden in 456 g Methylethylketon (MEK) gelöst und mit 3 g des Neutralisationsmittels Dimethylethanolamin versetzt. Anschließend werden 12,6 g Emulgator WN (Emulgierhilfsmittel, Fa. Bayer AG) zugegeben und durch Rühren eine homogene Mischung der Komponenten hergestellt.

Aus 963 g der Lösung aus Polyol, Polyisocyanat, Neutalisationsmittel und Additiv in MEK wird durch intensives Vermischen mit 500 g Wasser mittels eines Dissolvers eine Wasser-in-Öl-Emulsion hergestellt, die anschließend durch Passage durch einen Strahldispergator bei erhöhtem Druck (60 bar) gemäß EP 0101007 eine Phasenumkehr in eine Öl-in-Wasser-Emulsion erfährt. Das MEK wird im Vakuum abdestilliert. Dann wird mit 6 g Emulgator WN nachstabilisiert. Anschließend wird durch einen Filter mit der Maschenweite 10 µm filtriert. Es resultiert eine Polymerdispersion mit folgenden Kenndaten:

| | |
|---|---|
| Auslaufzeit (ISO 4-Becher, 23°C) | 13 sec |
| Festkörpergehalt | 44,3 Gew.-% |
| mittlere Teilchengröße (Laser-Korrelation-Spektroskopie) | 0,22 µm |
| Glasübergangstemperatur | 61°C |

### Dispersion I.2)

303,6 g des Polyacrylatpolyols A 2 und 222,0 g des blockierten Polyisocyanats B 2 werden in 440,5 g MEK gelöst und mit 2,7 g des Neutralisationsmittels Dimethylethanolamin versetzt. Anschließend werden 11,4 g Emulgator NP 30 (Emulgierhilfsmittel, Fa. Bayer AG) zugegeben und durch Rühren eine homogene Mischung der Komponenten hergestellt.

Aus 825 g der Lösung aus Polyol, Polyisocyanat, Neutalisationsmittel und Additiv in MEK wird durch intensives Vermischen mit 500 g Wasser mittels eines Dissolvers eine Wasser-in-Öl-Emulsion hergestellt, die anschließend durch Passage durch einen Strahldispergator bei erhöhtem Druck (1,0 bar) gemäß EP 0101007 eine Phasenumkehr in eine Öl-in-Wasser-Emulsion erfährt. Das MEK wird im Vakuum abdestilliert. Anschließend wird durch ein Filter mit der Maschenweite 10 µm filtriert. Es resultiert eine Polymerdispersion mit folgenden Kenndaten:

| | |
|---|---|
| Auslaufzeit (ISO 4-Becher, 23°C) | 9 sec |
| Festkörpergehalt | 34,0 Gew.-% |
| mittlere Teilchengröße (Laser-Korrelation-Spektroskopie) | 0,37 µm |
| Glasübergangstemperatur | 53°C |

### Dispersion I.3):

303,5 g des Polyacrylatpolyols A 2, 157,8 g des blockierten Polyisocyanats B 3 und 64,9 g des blockierten Polyisocyanats B 4 werden in 446,2 g MEK gelöst und mit 2,7 g des Neutralisationsmittels Dimethylethanolamin versetzt. Anschließend werden 11,5 g Emulgator NP 30 zugegeben und durch Rühren eine homogene Mischung der Komponenten hergestellt.

Aus 954 g der Lösung aus Polyol, Polyisocyanat, Neutalisationsmittel und Additiv in MEK wird durch intensives Vermischen mit 500 g Wasser mittels eines Dissolvers eine Wasser-in-Öl-Emulsion hergestellt, die anschließend durch Passage durch einen Strahldispergator bei erhöhtem Druck (1,0 bar) gemäß EP 0101007 eine Phasenumkehr in eine Öl-in-Wasser-Emulsion erfährt. Das MEK wird im Vakuum abdestilliert. Anschließend wird durch ein Filter mit der Maschenweite 10 µm filtriert. Es resultiert eine Polymerdispersion mit folgenden Kenndaten:

| | |
|---|---|
| Auslaufzeit (ISO 4-Becher, 23°C) | 15 sec |
| Festkörpergehalt | 47,0 Gew.-% |
| mittlere Teilchengröße (Laser-Korrelation-Spektroskopie) | 0,35 µm |
| Glasübergangstemperatur | 47°C |

### Dispersion I.4)

305,0 g des Polyacrylatpolyols A 2, 77,7 g des blockierten Polyisocyanats B 3 und 131,1 g des blockierten Polyisocyanats B 4 werden in 204,4 g MEK gelöst und mit 2,7 g des Neutralisationsmittels Dimethylethanolamin versetzt. Anschließend werden 11,3 g Emulgator NP 30, gelöst in 50 g MEK, zugegeben und durch Rühren eine homogene Mischung der Komponenten hergestellt.

Aus 770 g der Lösung aus Polyol, Polyisocyanat, Neutalisationsmittel und Additiv in MEK wird durch intensives Vermischen mit 400 g Wasser mittels eines Dissolvers eine Wasser-in-Öl-Emulsion hergestellt, die anschließend durch Passage durch einen Strahldispergator bei erhöhtem Druck (1,0 bar) gemäß EP 0101007 eine Phasenumkehr in eine Öl-in-Wasser-Emulsion erfährt. Das MEK wird im Vakuum abdestilliert. Anschließend wird durch ein Filter mit der Maschenweite 10 µm filtriert. Es resultiert eine Polymerdispersion mit folgenden Kenndaten:

| | |
|---|---|
| Auslaufzeit (ISO 4-Becher, 23°C) | 20 sec |
| Festkörpergehalt | 56,0 Gew.-% |
| mittlere Teilchengröße (Laser-Korrelation-Spektroskopie) | 0,35 µm |
| Glasübergangstemperatur | 38°C |

### Dispersion I.5):

308,5 g des Polyacrylatpolyols A 3 und 222,0 g des blockierten Polyisocyanats B 2 werden in 441,5 g MEK gelöst und mit 2,7 g des Neutralisationsmittels Dimethylethanolamin versetzt. Anschließend werden 11,4 g Emulgator NP 30 zugegeben und durch Rühren eine homogene Mischung der Komponenten hergestellt.

Aus 957 g der Lösung aus Polyol, Polyisocyanat, Neutalisationsmittel und Additiv in MEK wird durch intensives Vermischen mit 500 g Wasser mittels eines Dissolvers eine Wasser-in-Öl-Emulsion hergestellt, die anschließend durch Passage durch einen Strahldispergator bei erhöhtem Druck (1,0 bar) gemäß EP 0101007 eine Phasenumkehr in eine Öl-in-Wasser-Emulsion erfährt. Das MEK wird im Vakuum abdestilliert. Anschließend wird durch ein Filter mit der Maschenweite 10 µm filtriert. Es resultiert eine Polymerdispersion mit folgenden Kenndaten:

| | |
|---|---|
| Auslaufzeit (ISO 4-Becher, 23°C) | 14 sec |
| Festkörpergehalt | 43,1 Gew.-% |
| mittlere Teilchengröße (Laser-Korrelation-Spektroskopie) | 0,42 µm |
| Glasübergangstemperatur | 52°C |

### Dispersion I.6):

364,58 g des Polyacrylatpolyols A 2, 36,11 g des blockierten Polyisocyanats B 5 und 328,12 g des blockierten Polyisocyanats B 7 werden in 529,40 g MEK gelöst und mit 3,35 g des Neutralisationsmittels Dimethylethanolamin versetzt. Anschließend werden 16,78 g Emulgator WN (Emulgierhilfsmittel, Fa. Bayer AG) und 7,55 g Synperonic PE/F 127 (Emulgierhilfsmittel, Fa. ICI Surfactants) zugegeben und durch Rühren eine homogene Mischung der Komponenten hergestellt.

Aus 1008,26 g der Lösung aus Polyol, Polyisocyanat, Neutalisationsmittel und Additiven in MEK wird durch intensives Vermischen mit 500,00 g Wasser mittels eines Dissolvers eine Wasser-in-Öl-Emulsion hergestellt, die anschließend durch Passage durch einen Strahldispergator bei erhöhtem Druck (1,0 bar) gemäß EP 0101007 eine Phasenumkehr in eine Öl-in-Wasser-Emulsion erfährt. Das MEK wird im Vakuum abdestilliert. Anschließend wird durch ein Filter mit der Maschenweite 10 µm filtriert. Es resultiert eine Polymerdispersion mit folgenden Kenndaten:

| | |
|---|---|
| Auslaufzeit (ISO 4-Becher, 23°C) | 12 sec |
| Festkörpergehalt | 50,0 Gew.-% |
| mittlere Teilchengröße (Laser-Korrelation-Spektroskopie) | 0,32 µm |
| Glasübergangstemperatur | 32,5 °C |

### Dispersion I.7):

364,58 g des Polyacrylatpolyols A 2, 32,73 g des blockierten Polyisocyanats B 6 und 314,37 g des blockierten Polyisocyanats B 8 werden in 504,12 g MEK gelöst und mit 3,35 g des Neutralisationsmittels Dimethylethanolamin versetzt. Anschließend werden 16,20 g Emulgator WN (Emulgierhilfsmittel, Fa. Bayer AG) und 7,30 g Synperonic PE/F 127 zugegeben und durch Rühren eine homogene Mischung der Komponenten hergestellt.

Aus 1008,46 g der Lösung aus Polyol, Polyisocyanat, Neutalisationsmittel und Additiven in MEK wird durch intensives Vermischen mit 500,00 g Wasser mittels eines Dissolvers eine Wasser-in-Öl-Emulsion hergestellt, die anschließend durch Passage durch einen Strahldispergator bei erhöhtem Druck (10 bar) gemäß EP 0101007 eine Phasenumkehr in eine Öl-in-Wasser-Emulsion erfährt. Das MEK wird im Vakuum abdestilliert. Anschließend wird durch ein Filter mit der Maschenweite 10 µm filtriert. Es resultiert eine Polymerdispersion mit folgenden Kenndaten:

| | |
|---|---|
| Auslaufzeit (ISO 4-Becher, 23°C) | 13 sec |
| Festkörpergehalt | 50,0 Gew.-% |
| mittlere Teilchengröße (Laser-Korrelation-Spektroskopie) | 0,25 µm |
| Glasübergangstemperatur | 43,5 °C |

### 2. Verwendungsbeispiele

Es wird die Herstellung von Einbrennfüllern mittels Basispasten beschrieben, wie sie üblicherweise in der Praxis Anwendung findet.
1. Basispaste auf Basis einer selbstvemetzenden Polyurethan-Dispersion (®Bayhydrol VP LS 2153, Bayer AG), bestehend aus einer in Wasser dispergierten Polyhydroxylverbindung und einem in Wasser dispergierten blockierten Polyisocyanat (nicht erfindungsgemäß).
   Für eine Anreibung von 30 Minuten in einer Perlmühle werden nachstehende Komponenten eingewogen und ca. 10 Minuten mittels Dissolver vordispergiert: 670,9 Gew.-Teile der 40%-igen selbstvemetzenden PUR-Dispersion Bayhydrol VP LS 2153; 6,5 Gew.-Teile Dimethylethanolamin, 10 %ig in dest. Wasser; 6,0 Gew.-Teile eines handelsüblichen Antikratermittels; 6,0 Gew.-Teile eines handelsüblichen Benetzungsmittels; 4,0 Gew.-Teile eines in der Lackindustrie gebräuchlichen Antiabsetzmittels; 118,5 Gew.-Teile Titandioxid; 1,3 Gew.-Teile Eisenoxidschwarz; 119,2 Gew.-Teile mikronisierter Schwerspat; 29,1 Gew.-Teile carbonatfreies Talkum und 38,5 Gew.-Teile destilliertes Wasser. Hieraus resultiert eine Paste mit einem Festkörpergehalt (Bindemittel: Pigment/Füllstoffen =1:1) von ca. 53,6 Gew.-%.
2. Basispaste auf Basis der erfindungswesentlichen selbstvemetzenden Dispersion 1.5).
   Nachstehende Komponenten werden eingewogen, ca. 10 Minuten mittels Dissolver vordispergiert und anschließend 30 Minuten in einer Perlmühle angerieben: 692,5 Gew.-Teile der 43,1 %igen selbstvemetzenden Dispersion 1.5); 3,0 Gew.-Teile eines handelsüblichen Entschäumers; 4,5 Gew.-Teile eines in der Lackindustrie gebräuchlichen Antiabsetzmittels; 132,5 Gew.-Teile Titandioxid; 1,4 Gew.-Teile Eisenoxidschwarz; 133,5 Gew.-Teile mikronisierter Schwerspat und 32,6 Gew.-Teile carbonatfreies Talkum. Hieraus resultiert eine Paste mit einem Festkörpergehalt (Bindemittel: Pigment/Füllstoffen = 1:1) von ca. 59,7 Gew.-%.
3. Basispaste auf Basis der erfindungswesentlichen selbstvemetzenden Dispersion 1.4).
   Nachstehende Komponenten werden eingewogen, ca. 10 Minuten mittels Dissolver vordispergiert und anschließend 30 Minuten in einer Perlmühle angerieben: 680,4 Gew.-Teile einer 45,6 %igen selbstvernetzenden Dispersion I.4); 3,1 Gew.-Teile eines handelsüblichen Entschäumers; 4,6 Gew.-Teile eines in der Lackindustrie gebräuchlichen Antiabsetzmittels; 137,7 Gew.-Teile Titandioxid; 1,5 Gew.-Teile Eisenoxidschwarz; 138,8 Gew.-Teile mikronisierter Schwerspat und 33,9 Gew.-Teile carbonatfreies Talkum. Hieraus resultiert eine Paste mit einem Festkörpergehalt (Bindemittel: Pigment/Füllstoffen = 1:1) von ca. 62,4 Gew.-%.

### Herstellung von wässrigen Füllern auf Basis der Basispasten 1 bis 3.

Die Pasten werden gemäß den in nachfolgender Tabelle angegebenen Verhältnissen durch 10 minütiges Dispergieren mittels eines Dissolvers homogen gemischt und gegebenenfalls mit Wasser auf eine Verarbeitungsviskosität von ≤35 s (ISO-Cup 5 mm, ISO 2431) eingestellt. Die Zusammensetzungen und Kenndaten der erhaltenen wässrigen Füller ist in der nachfolgenden Tabelle 2 dargestellt.

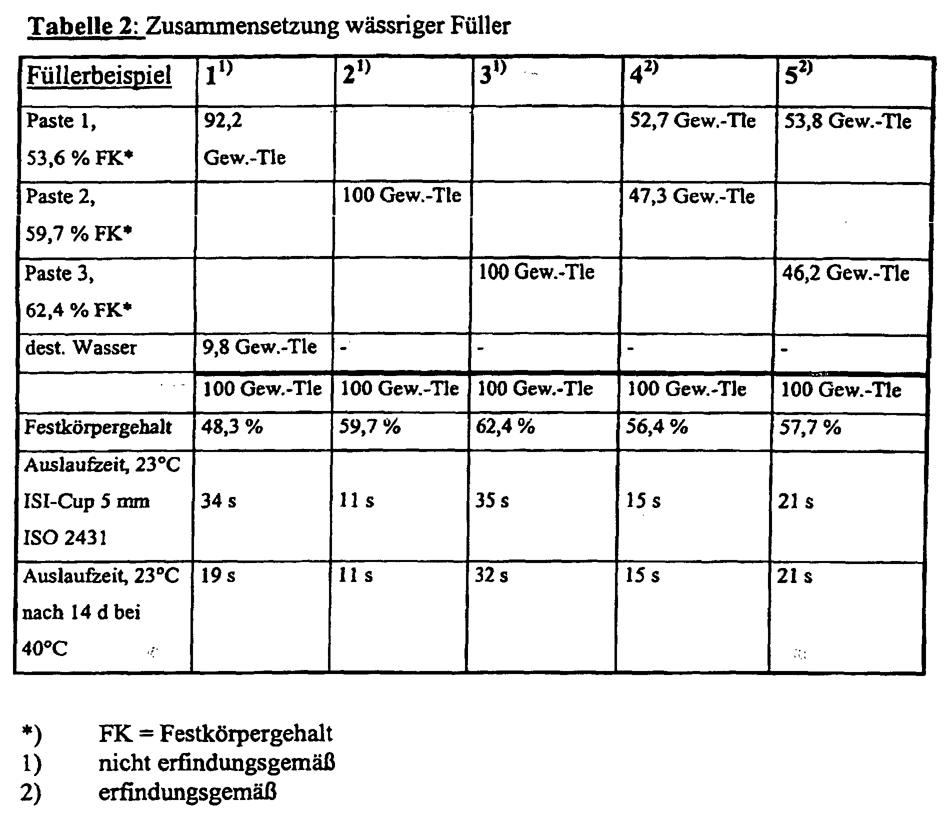

Die Festgehalte der erfindungsgemäßen Füller 4 und 5 sind deutlich höher und deren Viskositätsstabilität nach 40°C-Lagerung besser als beim hochwertigen Vergleichsfüller 1. Die nicht erfindungsgemäßen Füller 2 und 3 auf Basis der Pasten der erfindungswesentlichen Komponenten I) haben zwar die höchsten Festgehalte aller Beispiele, die weiteren Füllereigenschaften sind jedoch nicht ausreichend, wie nachfolgend aufgezeigt wird.

Die wässrigen Füller 1 bis 5 wurden mit einer handelsüblichen Fließbecherpistole mit 5 bar Luftdruck bei ca. 65 % rel. Feuchte (23°C) auf mit einer kathodisch abgeschiedenen Elektrotauchgrundierung (ca. 20 µm) beschichtete zinkphosphatierte Stahlbleche spritzappliziert.

Die Härtung der Füller erfolgte nach 10 minütiger Ablüftung bei 23°C im Umluftofen zunächst 10 min bei 70°C und anschließend 20 min bei 165°C. Die Trockenfilmstärke betrug ca. 35 µm.

In der nachfolgenden Tabelle 3 sind die Eigenschaften der Füller aufgeführt

**Tabelle 3:**

| Eigenschaften der Füller | | | | | |
|---|---|---|---|---|---|
| **Füllerbeispiel** | **1** | **2** | **3** | **4** | **5** |
| Erichsen-Tiefung DIN ISO 1520 | 9,2 mm | 2,7 mm | 5,1 mm | 8,4 mm | 8,6 mm |
| Pendelhärte DIN 53157 | 70 s | 174 s | 163 s | 158 s | 149 s |
| Glanz 64° (nach Gardner) | 68 % | 33 % | 44 % | 65 % | 70 % |

Die erfindungsgemäßen Füller 4 und 5 haben im Vergleich zum handelsüblichen Füller 1 eine sehr hohe Härte und eine für diese Härte sehr gut Elastizität. Die Glanzwerte der Füller liegen auf ähnlichem Niveau. Die Füller 2 und 3 haben eine etwas höhere Härte als die erfindungsgemäßen Füller 4 und 5, jedoch eine schlechtere Elastizität und einen geringeren Glanz.

Auf die Füllerschichten wurde ein handelsüblicher Automobildecklack auf Basis Alkyd/Melaminharz mittels einer luftzerstäubenden Spritzpistole mit einer Trockenfilmstärke von ca. 30 µm aufgebracht und 30 min bei 130°C ausgehärtet.

Die wichtigsten, für die Fülleranwendung entscheidenden Prüfergebnisse sind in der nachfolgenden Tabelle zusammengefasst. Nicht angegebene Beständigkeitswerte, wie z.B. Lösemittel-, Wasser- und Salzsprühfestigkeit, entsprechen vollständig den Anforderungen der Praxis.

### Benutzte Prüfmethoden

### Decklackstand: Messung der Welligkeit mittels eines Wave Scan Messgerätes der Fa. Byk

### Steinschlagfestigkeit: Als Prüfgeräte wurden verwendet

a) Steinschlagprüfgerät nach VDA (Fa. Erichsen, Modell 508) mit jeweils 2 mal 500 g Stahlschrot (kantig, 4-5 mm) beschossen mit einem Luftdruck von 1,5 bar bei 23°C. Abmusterungen wurden durchgeführt bezüglich Durchschläge bis auf das Blech (0 bis 10, 0 = keine Durchschläge, 10 = sehr viele Durchschläge).
b) Einzelschlagprüfgerät ESP-10 nach BMW Norm DBP Nr 34.31.390 (Fa. Byk), gemessen werden die Abplatzungen des Füllers vom Blech in mm.

**Tabelle 4:**

| Decklackstand, Messung mittels Wave Scan (Byk), (korrigierte Werte angegeben) | | | | | |
|---|---|---|---|---|---|
| **Füllerbeispiel** | **1** | **2** | **3** | **4** | **5** |
| Kurzwelligkeit | 7,3 | 6,0 | 5,6 | 5,7 | 4,5 |
| Langwelligkeit | 29,4 | 21,7 | 22,6 | 20,4 | 19,2 |

Je niedriger die Zahlenwerte sowohl bei der Kurz- als auch bei der Langwelligkeit sind, desto besser ist der Decklackstand. Die erfindungsgemäßen Füller 4 bis 5 führen demnach zu einem besseren Decklackstand als die Vergleichsfüller 1 bis 3.

**Tabelle 5:**

| Steinschlagtest | | | | | |
|---|---|---|---|---|---|
| 2 mal 500 g Stahlschrot, 1,5 bar (Kennwert 1-10) | | | | | |
| **Füllerbeispiel** | **1** | **2** | **3** | **4** | **5** |
| VDA-Multischlag: Kennwert für Durchschläge | 1-2 | 2 | 2 | 1-2 | 1-2 |
| BMW-Einzelschlag bei -20°C | < 1 mm | 2,5 mm | 2,5 mm | < 1mm | < 1mm |

Die erfindungsgemäßen Füller 4 bis 5 liegen auf gleich hohem Niveau wie der hochwertige Vergleichsfüller 1, obwohl die erfindungsgemäßen Füller eine deutlich höhere Härte besitzen. Dieses Ergebnis ist überraschend und so nicht vorhersehbar. Die Füller 2 und 3 haben eine schlechtere Steinschlagfestigkeit.

### Zusammenfassung und Diskussion der Ergebnisse

Die erfindungsgemäßen Füller 4 und 5 zeichnen sich durch einen sehr hohen Festkörpergehalt und eine sehr hohe Härte aus. Daher waren nur eine geringe Elastizität, verbunden mit einer mangelhaften Steinschlagfestigkeit sowie einem schlechten Decklackstand zu erwarten. Die Prüfergebnisse zeigen jedoch deutlich, dass die erfindungsgemäßen Füller entgegen dem bisherigen Stand der Technik sowohl gute Elastizitätswerte als auch sehr gute Steinschlagfestigkeiten und Decklackstände aufweisen und damit einem hochwertigen, handelsüblichen Polyurethanfüller überlegen sind. Sie haben ein bisher nicht gekanntes Qualitätsniveau bezüglich des gesamten Eigenschaftsspektrums.

## Patentansprüche

1. Bindemittelgemisch bestehend aus
1) einer wässrigen selbstvernetzenden Dispersion (I) bestehend aus:
A) mindestens einer Polyolkomponente auf Basis von Polyacrylatpolyolen und/oder Polyesterpolyacrylatpolyolen mit einem Hydroxylgruppengehalt von 1,0 bis 8,0 Gew.-%, einem Carboxylgruppengehalt von 0 bis 3,0 Gew.-%, einem gewichtsgemittelten Molekulargewicht von 2 000 bis 50 000 und einer Glasübergangstemperatur von ≥10°C,
B) mindestens einer Polyisocyanatkomponente mit blockierten Isocyanatgruppen auf Basis von (cyclo)aliphatischen Polyisocyanaten mit einem Gehalt an blockierten Isocyanatgruppen von 5,0 bis 25,0 Gew.-%,
C) gegebenenfalls weiteren polyfunktionellen Polyolen,
D) gegebenenfalls weiteren Vernetzersubstanzen,
E) gegebenenfalls externen Emulgatoren und
F) gegebenenfalls üblichen Zusatzmitteln,
mit der Maßgabe, dass die Komponente I) entweder nach einem Direktdispergierverfahren oder nach dem Phasenumkehrverfahren mittels einer Dispergiervorrichtung mit hoher volumenbezogener Dispergierleistung hergestellt wurde und dann eine mittlere Teilchengröße der Dispersionspartikel von 0,05 bis 10 µm Teilchendurchmesser aufweist, und
2) weiteren Komponenten:
II) in Wasser löslichen oder dispergierbaren Polyhydroxylverbindungen,
III) in Wasser löslichen oder dispergierbaren, blockierten Polyisocyanaten und/oder Aminoharzen und
IV) gegebenenfalls weiteren in Wasser löslichen oder dispergierbaren Substanzen,
**dadurch gekennzeichnet, dass** das Bindemittelgemisch Feststoffgehalte von ≥ 55 Gew.-% aufweist.

2. Bindemittelgemisch gemäß Anspruch 1, **dadurch gekennzeichnet, dass** die Polyolkomponente A) der Komponente I) besteht aus:
a) 0 bis 100 Gew.-Teilen einer Polyesterkomponente, bestehend aus mindestens einem Polyesterpolyol mit einer Hydroxylzahl von 20 bis 240 mg KOH/g bei einer Säurezahl von <20 mg KOH/g und einer Glasübergangstemperatur von -40 bis +100°C,
b) 0 bis 15 Gew.-Teilen einer olefinisch ungesättigten Esterkomponente, bestehend aus mindestens einem Maleinsäuredi(cyclo)alkylester mit 1 bis 12 Kohlenstoffatomen im (Cyclo)alkylrest,
c) 0 bis 70 Gew.-Teilen (Cyclo)alkylester der Acryl- und/oder Methacrylsäure mit 1 bis 18 Kohlenstoffatomen im (Cyclo)alkylrest,
d) 0 bis 70 Gew.-Teilen aromatischen, olefinisch ungesättigten Monomen,
e) 5 bis 60 Gew.-Teilen Hydroxyalkylester der Acryl- und/oder Methacrylsäure mit 2 bis 4 Kohlenstoffatomen im Hydroxyalkylrest und/oder deren Umsetzungsprodukte eines maximalen Molekulargewichts von 500 mit ε-Caprolacton sowie Additionsprodukten von Acryl- und/oder Methacrylsäure und Monoepoxidverbindungen, die auch während der radikalischen Polymerisation in situ erzeugt werden können,
f) 0 bis 10 Gew.-Teilen olefinisch ungesättigten Carbonsäuren und
g) 0 bis 30 Gew.-Teilen weiteren copolymerisierbaren, olefinisch ungesättigten Verbindungen,
wobei die Summe der Gew.-Teile der Komponenten a) bis g) 100 ergibt.

3. Bindemittelgemisch gemäß Anspruch 1 und 2, **dadurch gekennzeichnet, dass** die Polyolkomponente A) der Komponente I) besteht aus:
a) 0 bis 60 Gew.-Teilen einer Polyesterkomponente, bestehend aus mindestens einem Polyesterpolyol mit einer Hydroxylzahl von 30 bis 200 mg KOH/g bei einer Säurezahl von <15 mg KOH/g und einer Glasübergangstemperatur von -30 bis +80°C,
b) 0 bis 12,5 Gew.-Teilen einer olefinisch ungesättigten Esterkomponente, bestehend aus mindestens einem Maleinsäuredi(cyclo)alkylester mit 1 bis 6 Kohlenstoffatomen im (Cyclo)alkylrest,
c) 5 bis 65 Gew.-Teilen (Cyclo)alkylester der Acryl- und/oder Methacrylsäure mit 1 bis 15 Kohlenstoffatomen im (Cyclo)alkylrest,
d) 0 bis 65 Gew.-Teilen Styrol, α-Methylstyrol und/oder Vinyltoluol,
e) 5 bis 55 Gew.-Teilen Hydroxyallcylester der Acryl- und/oder Methacrylsäure mit 2 bis 4 Kohlenstoffatomen im Hydroxyalkylrest und/oder deren Umsetzungsprodukte eines maximalen Molekulargewichts von 500 mit ε-Caprolacton sowie Additionsprodukten von Acryl- und/oder Methacrylsäure und Monoepoxidverbindungen, die auch während der radikalischen Polymerisation in situ erzeugt werden können.
f) 0 bis 7,5 Gew.-Teilen Acrylsäure, Methacrylsäure, Maleinsäure, Fumarsäure und/oder Malein- bzw. Fumarsäurehalbester mit 1 bis 8 Kohlenstoffatomen im Alkoholrest und
g) 0 bis 25 Gew.-Teilen weiteren copolymerisierbaren, olefinisch ungesättigten Verbindungen,
wobei die Summe der Gew.-Teile der Komponenten a) bis g) 100 ergibt.

4. Bindemittelgemisch gemäß den Ansprüchen 1 bis 3, **dadurch gekennzeichnet, dass** die Polyolkomponente A) der Komponente I) besteht aus:
a) 0 bis 50 Gew.-Teilen einer Polyesterkomponente, bestehend aus mindestens einem Polyesterpolyol mit einer Hydroxylzahl von 40 bis 160 mg KOH/g bei einer Säurezahl von <12 mg KOH/g und einer Glasübergangstemperatur von -30 bis + 70°C,
b) 0 bis 10 Gew.-Teilen Maleinsäuredimethylester, Maleinsäurediethylester, Maleinsäuredibutylester oder Gemische dieser Monomeren
c) 5 bis 60 Gew.-Teilen (Cyclo)alkylester der Acryl- und/oder Methacrylsäure mit 1 bis12 Kohlenstoffatomen im (Cyclo)alkylrest,
d) 5 bis 50 Gew.-Teilen Styrol,
e) 10 bis 50 Gew.-Teile Hydroxyethylacrylat, Hydroxyethylmethacrylat, Hydroxypropylacrylat, Hydroxypropylmethacrylat, Hydroxybutylacrylat und/oder Hydroxybutylmethacrylat,
f) 0,5 bis 5 Gew.-Teile Acrylsäure und/oder Methacrylsäure und
g) 0 bis 20 Gew.-Teilen weiteren copolymerisierbaren, olefinisch ungesättigten Verbindungen,
wobei die Summe der Komponenten a) bis g) 100 ergibt.

5. Bindemittelgemisch gemäß Anspruch 1, **dadurch gekennzeichnet, dass** die Komponente II) besteht aus: Polyhydroxypolyestern, Polyhydroxypolyethern, Polyhydroxypolyurethanen, Polyhydroxycarbonaten, urethanmodifizierten Polyesterpolyolen, urethanmodifizierten Polyetherpolyolen, urethanmodifizierten Polycarbonatpolyolen, Hydroxylgruppen aufweisenden Polymerisaten, Polyesterpolyacrylatpolyolen, Polyetherpolyacrylatpolyolen, Polyurethanpolyacrylatpolyolen Polyesterpolyurethanen, Polyetherpolyurethanen, Polycarbonatpolyurethanen, Polyetherpolyestern oder deren Mischungen.

6. Bindemittelgemisch gemäß Anspruch 1, **dadurch gekennzeichnet, dass** die Komponente III) besteht aus: in Wasser löslichen oder dispergierbaren blockierten Polyisocyanaten.

7. Bindemittelgemisch gemäß Anspruch 1, **dadurch gekennzeichnet, dass** die Komponente IIII) besteht aus: in Wasser löslichen oder dispergierbaren Aminoharzen.

8. Verwendung der Bindemittelgemische gemäß Anspruch 1 bis 7 zur Herstellung von, gegebenenfalls die üblichen Hilfs- und Zusatzmittel der Beschichtungstechnologie enthaltenden, wässrigen Einbrennlacken.

9. Wässriger Einbrennlack enthaltend Bindemittelgemische gemäß Anspruch 1.

10. Verwendung des wässrigen Einbrennlackes gemäß Anspruch 9 zur Herstellung von Füllern für Automobilkarosserieteile.

## Claims

1. Binder mixture composed of
1) an aqueous self-crosslinking dispersion (I) composed of:
A) at least one polyol component based on polyacrylate polyols and/or polyester-polyacrylate polyols with a hydroxyl group content of 1.0 to 8.0 wt. %, a carboxyl group content of 0 to 3.0 wt. %, a weight-average molecular weight of 2,000 to 50,000 and a glass transition temperature of ≥ 10°C,
B) at least one polyisocyanate component with blocked isocyanate groups based on (cyclo)aliphatic polyisocyanates with a content of blocked isocyanate groups of 5.0 to 25.0 wt. %,
C) optionally further polyfunctional polyols,
D) optionally further crosslinking substances,
E) optionally external emulsifiers and
F) optionally conventional additives,
with the proviso that component I) has been prepared either by a direct dispersing process or by the phase inversion process by means of a dispersing device with a high dispersing output per unit volume and then has an average particle size of the dispersion particles of 0.05 to 10 µm particle diameter, and
2) further components:
II) water-soluble or -dispersible polyhydroxy compounds,
III) water-soluble or -dispersible blocked polyisocyanates and/or amino resins and
IV) optionally further water-soluble or -dispersible substances,
**characterized in that** the binder mixture has solids contents of ≥55 wt. %.

2. Binder mixture according to Claim 1, **characterized in that** the polyol component A) of component I) is composed of:
a) 0 to 100 parts by wt. of a polyester component comprising at least one polyester polyol with a hydroxyl number of 20 to 240 mg KOH/g at an acid number of <20 mg KOH/g and a glass transition temperature of -40 to +100°C,
b) 0 to 15 parts by wt. of an olefinically unsaturated ester component comprising at least one maleic acid di(cyclo)alkyl ester having 1 to 12 carbon atoms in the (cyclo)alkyl radical,
c) 0 to 70 parts by wt. of (cyclo)alkyl esters of acrylic and/or methacrylic acid having 1 to 18 carbon atoms in the (cyclo)alkyl radical,
d) 0 to 70 parts by wt. of aromatic, olefinically unsaturated monomers,
e) 5 to 60 parts by wt. of hydroxyalkyl esters of acrylic and/or methacrylic acid having 2 to 4 carbon atoms in the hydroxyalkyl radical and/or reaction products thereof, with a maximum molecular weight of 500, with ε-caprolactone and addition products of acrylic and/or methacrylic acid and monoepoxide compounds, which can also be produced in situ during the free-radical polymerization,
f) 0 to 10 parts by wt. of olefinically unsaturated carboxylic acids and
g) 0 to 30 parts by wt. of further copolymerizable, olefinically unsaturated compounds,
the sum of the parts by wt. of components a) to g) giving 100.

3. Binder mixture according to Claim 1 and 2, **characterized in that** the polyol component A) of component I) is composed of:
a) 0 to 60 parts by wt. of a polyester component comprising at least one polyester polyol with a hydroxyl number of 30 to 200 mg KOH/g at an acid number of <15 mg KOH/g and a glass transition temperature of -30 to +80°C,
b) 0 to 12.5 parts by wt. of an olefinically unsaturated ester component comprising at least one maleic acid di(cyclo)alkyl ester having 1 to 6 carbon atoms in the (cyclo)alkyl radical,
c) 5 to 65 parts by wt. of (cyclo)alkyl esters of acrylic and/or methacrylic acid having 1 to 15 carbon atoms in the (cyclo)alkyl radical,
d) 0 to 65 parts by wt. of styrene, α-methylstyrene and/or vinyltoluene,
e) 5 to 55 parts by wt. of hydroxyalkyl esters of acrylic and/or methacrylic acid having 2 to 4 carbon atoms in the hydroxyalkyl radical and/or reaction products thereof, with a maximum molecular weight of 500, with ε-caprolactone and addition products of acrylic and/or methacrylic acid and monoepoxide compounds, which can also be produced in situ during the free-radical polymerization,
f) 0 to 7.5 parts by wt. of acrylic acid, methacrylic acid, maleic acid, fumaric acid and/or maleic and/or fumaric acid monoesters having 1 to 8 carbon atoms in the alcohol radical and
g) 0 to 25 parts by wt. of further copolymerizable, olefinically unsaturated compounds,
the sum of the parts by wt. of components a) to g) giving 100.

4. Binder mixture according to Claims 1 to 3, **characterized in that** the polyol component A) of component I) is composed of:
a) 0 to 50 parts by wt. of a polyester component comprising at least one polyester polyol with a hydroxyl number of 40 to 160 mg KOH/g at an acid number of <12 mg KOH/g and a glass transition temperature of -30 to +70°C,
b) 0 to 10 parts by wt. of dimethyl maleate, diethyl maleate, dibutyl maleate or mixtures of these monomers,
c) 5 to 60 parts by wt. of (cyclo)alkyl esters of acrylic and/or methacrylic acid having 1 to 12 carbon atoms in the (cyclo)alkyl radical,
d) 5 to 50 parts by wt. of styrene,
e) 10 to 50 parts by wt. of hydroxyethyl acrylate, hydroxyethyl methacrylate, hydroxypropyl acrylate, hydroxypropyl methacrylate, hydroxybutyl acrylate and/or hydroxybutyl methacrylate,
f) 0.5 to 5 parts by wt. of acrylic acid and/or methacrylic acid and
g) 0 to 20 parts by wt. of further copolymerizable, olefinically unsaturated compounds,
the sum of the parts by wt. of components a) to g) giving 100.

5. Binder mixture according to Claim 1, **characterized in that** component (II) is composed of: polyhydroxypolyesters, polyhydroxypolyethers, polyhydroxypolyurethanes, polyhydroxycarbonates, urethane-modified polyester polyols, urethane-modified polyether polyols, urethane-modified polycarbonate polyols, polymers containing hydroxyl groups, polyester-polyacrylate polyols, polyether-polyacrylate polyols, polyurethane-polyacrylate polyols, polyester-polyurethanes, polyether-polyurethanes, polycarbonate-polyurethanes, polyether-polyesters or mixtures thereof.

6. Binder mixture according to Claim 1, **characterized in that** component III) is composed of: water-soluble or -dispersible blocked polyisocyanates.

7. Binder mixture according to Claim 1, **characterized in that** component III) is composed of: water-soluble or -dispersible amino resins.

8. Use of the binder mixtures according to Claims 1 to 7 for the preparation of aqueous stoving lacquers which optionally comprise the conventional auxiliary substances and additives of coating technology.

9. Aqueous stoving lacquer comprising binder mixtures according to Claim 1.

10. Use of the aqueous stoving lacquer according to Claim 9 for the preparation of filler compositions for car body components.

## Revendications

1. Liant mélangé consistant
1) une dispersion aqueuse autoréticulante I) consistant elle-même en :
A) au moins un composant polyol à base de polyacrylate-polyols et/ou de polyester-polyacrylate-polyols à une teneur en groupes hydroxy de 1,0 à 8,0 % en poids, une teneur en groupes carboxyle de 0 à 3,0 % en poids, un poids moléculaire moyen, moyenne en poids, de 2 000 à 50 000 et une température de transition du second ordre ≥ 10°C,
B) au moins un composant polyisocyanate à groupes isocyanate bloqués, à base de polyisocyanates (cyclo)aliphatiques, à une teneur en groupes isocyanate bloqués de 5,0 à 25,0 % en poids,
C) le cas échéant d'autres polyols polyfonctionnels,
D) le cas échéant d'autres agents réticulants,
E) le cas échéant des agents émulsionnants externes et
F) le cas échéant des additifs usuels,
sous réserve que le composant I) ait été préparé par une technique de dispersion directe ou par une technique avec inversion de phase à l'aide d'un appareil de dispersion à forte puissance de dispersion rapportée au volume et présente ensuite une dimension de particule moyenne en dispersion de 0,05 à 10 µm de diamètre, et
2) d'autres composants :
II) des composés polyhydroxylés solubles ou dispersables à l'eau,
III) des polyisocyanates bloqués et/ou des résines aminées solubles ou dispersables à l'eau, et
IV) le cas échéant d'autres substances solubles ou dispersables à l'eau,
**caractérisé en ce qu'**il a une teneur en matières solides ≥ 55 % en poids.

2. Liant mélangé selon la revendication 1, **caractérisé en ce que** le composant polyol A) du composant I) consiste en :
a) 0 à 100 parties en poids d'un composant polyester consistant en au moins un polyester-polyol à un indice d'hydroxyle de 20 à 240 mg de KOH/g pour un indice d'acide inférieur à 20 mg de KOH/g et une température de transition du second ordre de -40 à +100°C,
b) 0 à 15 parties en poids d'un composant ester à insaturation oléfinique, consistant en au moins un maléate de di(cyclo)alkyle contenant 1 à 12 atomes de carbone dans le groupe (cyclo)alkyle,
c) 0 à 70 parties en poids d'esters (cyclo)alkyliques de l'acide acrylique et/ou méthacrylique contenant 1 à 18 atomes de carbone dans le groupe (cyclo)alkyle,
d) 0 à 70 parties en poids de monomères aromatiques à insaturation oléfinique,
e) 5 à 60 parties en poids d'esters hydroxyalkyliques de l'acide acrylique et/ou méthacrylique contenant 2 à 4 atomes de carbone dans le groupe hydroxyalkyle et/ou de leurs produits de réaction à un poids moléculaire maximum de 500, avec l'ε-caprolactone, ou de produits d'addition de l'acide acrylique et/ou méthacrylique et de composés monoépoxydiques, qui peuvent également se former in situ au cours de la polymérisation radicalaire,
f) 0 à 10 parties en poids d'acides carboxyliques à insaturation oléfinique, et
g) 0 à 30 parties en poids d'autres composés à insaturation oléfinique copolymérisables,
la somme des parties en poids des composants a) à g) représentant 100 parties.

3. Liant mélangé selon les revendications 1 et 2, **caractérisé en ce que** le composant polyol A) du composant I) consiste en :
a) 0 à 60 parties en poids d'un composant polyester consistant lui-même en au moins un polyester-polyol à un indice d'hydroxyle de 30 à 200 mg de KOH/g pour un indice d'acide inférieur à 15 mg de KOH/g et une température de transition du second ordre de -30 à +80°C,
b) 0 à 12,5 parties en poids d'un composant ester à insaturation oléfinique consistant en au moins un maléate de di(cyclo)alkyle contenant 1 à 6 atomes de carbone dans le groupe (cyclo)alkyle,
c) 5 à 65 parties en poids d'esters (cyclo)alkyliques de l'acide acrylique et/ou méthacrylique contenant 1 à 15 atomes de carbone dans le groupe (cyclo)alkyle,
d) 0 à 65 parties en poids de styrène, d'α-méthylstyrène et/ou de vinyltoluène,
e) 5 à 55 parties en poids d'esters hydroxyalkyliques de l'acide acrylique et/ou méthacrylique contenant 2 à 4 atomes de carbone dans le groupe hydroxyalkyle et/ou de leurs produits de réaction, à un poids moléculaire maximum de 500, avec l'ε-caprolactone, ou de produits d'addition de l'acide acrylique et/ou méthacrylique et de composés monoépoxydiques, qui peuvent également être formés in situ au cours de la polymérisation radicalaire,
f) 0 à 7,5 parties en poids d'acide acrylique, d'acide méthacrylique, d'acide maléique, d'acide fumarique ou d'hémiesters maléiques ou fumariques contenant 1 à 8 atomes de carbone dans le radical alcoolique,
g) 0 à 25 parties en poids d'autres composés à insaturation oléfinique copolymérisable,
la somme des parties en poids des composants a) à g) représentant 100 parties.

4. Liant mélangé selon les revendications 1 à 3, **caractérisé en ce que** le composant polyol A) du composant I) consiste en :
a) 0 à 50 parties en poids d'un composant polyester consistant lui-même en au moins un polyester-polyol à un indice d'hydroxyle de 40 à 160 mg de KOH/g pour un indice d'acide inférieur à 12 mg de KOH/g et une température de transition du second ordre de -30 à +70°C,
b) 0 à 10 parties en poids de maléate de diméthyle, de maléate de diéthyle, de maléate de dibutyle ou d'un mélange de ces monomères,
c) 5 à 60 parties en poids d'esters (cyclo)alkyliques de l'acide acrylique et/ou méthacrylique contenant 1 à 12 atomes de carbone dans le groupe (cyclo)alkyle,
d) 5 à 50 parties en poids de styrène,
e) 10 à 50 parties en poids d'acrylate d'hydroxyéthyle, de méthacrylate d'hydroxyéthyle, d'acrylate d'hydroxy-propyle, de méthacrylate d'hydroxypropyle, d'acrylate d'hydroxybutyle et/ou de méthacrylate d'hydroxy-butyle,
f) 0,5 à 5 parties en poids d'acide acrylique et/ou méthacrylique, et
g) 0 à 20 parties en poids d'autres composés à insaturation oléfinique copolymérisable,
la somme des composants a) à g) représentant 100 parties.

5. Liant mélangé selon la revendication 1, **caractérisé en ce que** le composant II) consiste en : polyhydroxypolyesters, polyhydroxypolyéthers, polyhydroxypolyuréthannes, polyhydroxycarbonates, polyester-polyols à modification uréthane, polyéther-polyols à modification uréthane, polycarbonate-polyols à modification uréthane, polymères à groupes hydroxy, polyester-polyacrylate-polyols, polyéther-polyacrylate-polyols, polyuréthanne-polyacrylate-polyols, polyester-polyuréthannes, polyéther-polyuréthannes, polycarbonate-polyuréthannes, polyéther-polyesters ou leurs mélanges.

6. Liant mélangé selon la revendication 1, **caractérisé en ce que** le composant III) consiste en polyisocyanates bloqués solubles ou dispersables à l'eau.

7. Liant mélangé selon la revendication 1, **caractérisé en ce que** le composant 3 consiste en résines aminées solubles ou dispersables dans l'eau.

8. Utilisation des liants mélangés selon les revendications 1 à 7 pour la préparation de produits de revêtement aqueux à cuire au four contenant le cas échéant les produits auxiliaires et additifs usuels de l'industrie des peintures et vernis.

9. Produit de revêtement aqueux à cuire à four contenant des liants mélangés selon la revendication 1.

10. Utilisation des produits de revêtement aqueux selon la revendication 9 pour la préparation de mastics pour pièces de carrosserie d'automobile.
